(19) Europäisches Patentamt

European Patent Office

Office européen des brevets

(11) **EP 1 469 935 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(21) Anmeldenummer: **03731665.0**

(22) Anmeldetag: **08.01.2003**

(51) Int Cl.:
**B01D 67/00** *(2006.01)*      **B01D 71/26** *(2006.01)*
**B01D 69/02** *(2006.01)*      **B01D 69/08** *(2006.01)*
**B01D 53/22** *(2006.01)*

(86) Internationale Anmeldenummer:
**PCT/EP2003/000084**

(87) Internationale Veröffentlichungsnummer:
**WO 2003/061812 (31.07.2003 Gazette 2003/31)**

(54) **VERFAHREN ZUR HERSTELLUNG VON POLYOLEFINMEMBRANEN MIT INTEGRAL ASYMMETRISCHER STRUKTUR**

METHOD FOR THE PRODUCTION OF POLYOLEFIN MEMBRANES WITH AN INTEGRALLY ASYMMETRIC STRUCTURE

PROCEDE DE PRODUCTION DE MEMBRANES POLYOLEFINE PRESENTANT UNE STRUCTURE INTEGRALEMENT ASYMETRIQUE

(84) Benannte Vertragsstaaten:
**AT BE BG CH CY CZ DE DK EE ES FI FR GB GR HU IE IT LI LU MC NL PT SE SI SK TR**

(30) Priorität: **24.01.2002 DE 10202594**

(43) Veröffentlichungstag der Anmeldung:
**27.10.2004 Patentblatt 2004/44**

(73) Patentinhaber: **Membrana GmbH**
**42289 Wuppertal (DE)**

(72) Erfinder:
• **KESSLER, Erich**
**64739 Höchst i. Odw. (DE)**
• **BATZILLA, Thomas**
**63827 Miltenberg (DE)**
• **WECHS, Friedbert**
**63939 Wörth (DE)**
• **WIESE, Frank**
**42289 Wuppertal (DE)**

(74) Vertreter: **Schröder, Richard**
**CPW GmbH**
**Kasinostrasse 19-21**
**42103 Wuppertal (DE)**

(56) Entgegenhaltungen:
**WO-A-00/43113**          **WO-A-99/04891**
**US-A- 4 247 498**        **US-A- 4 490 431**
**US-A- 4 564 488**

**Beschreibung**

Die Erfindung betrifft ein Verfahren zur Herstellung einer hydrophoben Membran über einen thermisch induzierten Phasenseparationsprozess gemäß Oberbegriff des Anspruchs 1, wobei die Membran eine schwammartige, offenporige mikroporöse Struktur enthält.

In einer Vielzahl von Anwendungen aus den Bereichen der Chemie, Biochemie oder der Medizin stellt sich das Problem, gasförmige Komponenten aus Flüssigkeiten abzutrennen oder solche Komponenten den Flüssigkeiten hinzuzufügen. Für derartige Gasaustauschprozesse werden in zunehmendem Maße Membranen eingesetzt, die als Trennmembran zwischen der jeweiligen Flüssigkeit, von der eine gasförmige Komponente abgetrennt bzw. zu der eine gasförmige Komponente hinzugefügt werden soll, und einem diese gasförmige Komponente aufnehmenden oder abgebenden Fluid dient. Hierbei kann das Fluid sowohl ein Gas sein oder auch eine Flüssigkeit, die die auszutauschende Gaskomponente enthält bzw. aufnehmen kann. Mittels derartiger Membranen kann eine große Fläche für den Gasaustausch bereitgestellt werden und - wenn dies erforderlich ist - ein direkter Kontakt zwischen Flüssigkeit und Fluid vermieden werden.

Auch zur Abtrennung einzelner Gaskomponenten aus einer Mischung verschiedener Gase werden in vielfacher Weise Membranen eingesetzt. Bei solchen membranbasierten Gastrennprozessen wird die aufzutrennende Gasmischung über die Oberfläche einer zur Gastrennung einsetzbaren Membran geführt. Über Sorptions- und Diffusionsmechanismen erfolgt ein Transport der Gaskomponenten durch die Membranwand hindurch, wobei der Transport der einzelnen Gaskomponenten der Mischung mit unterschiedlicher Geschwindigkeit erfolgt. Hierdurch wird der durch die Membran hindurchgetretene Permeatstrom bzgl. der am schnellsten permeierenden Gaskomponente angereichert, wohingegen der Retentatstrom bzgl. der weniger gut permeierenden Komponenten angereichert wird.

Diese Möglichkeit, mittels Membranen einzelne Gaskomponenten aus einer Gasmischung abzutrennen, findet zahlreiche Anwendungen. So können membranbasierte Gastrennsysteme etwa zur Sauerstoffanreicherung von Luft zur Erhöhung der Verbrennungseffizienz eingesetzt werden oder zur Anreicherung von Stickstoff in Luft für Anwendungen, bei denen eine inerte Atmosphäre benötigt wird.

Eine wichtige Anwendung membranbasierter Gasaustauschprozesse im medizinischen Bereich sind Oxygenatoren, auch künstliche Lungen genannt. Bei diesen Oxygenatoren, die z.B. bei Operationen am offenen Herzen eingesetzt werden, erfolgt eine Oxygenation von Blut und eine Entfernung von Kohlendioxid aus dem Blut. In der Regel werden bei derartigen Oxygenatoren Bündel aus Hohlfasermembranen eingesetzt. Venöses Blut strömt dabei im Außenraum um die Hohlfasermembranen, während durch das Lumen der Hohlfasermembranen Luft, mit Sauerstoff angereicherte Luft oder auch reiner Sauerstoff, d.h. ein Gas geführt wird. Über die Membranen besteht ein Kontakt zwischen Blut und Gas, wodurch ein Transport von Sauerstoff in das Blut und gleichzeitig ein Transport von Kohlendioxid aus dem Blut in das Gas erfolgen kann.

Um das Blut ausreichend mit Sauerstoff zu versorgen und gleichzeitig Kohlendioxid in ausreichendem Maße aus dem Blut entfernen zu können, müssen die Membranen einen hohen Gastransport gewährleisten: Es muss eine ausreichende Menge Sauerstoff von der Gasseite der Membran zur Blutseite und umgekehrt eine ausreichende Menge Kohlendioxid von der Blutseite der Membran zur Gasseite transferiert werden, d.h. die Gasflüsse bzw. die Gastransferraten, ausgedrückt als das Volumen eines Gases, das pro Zeiteinheit und Membranfläche von einer Membranseite auf die andere transportiert wird, müssen groß sein. Einen entscheidenden Einfluss auf die Transferraten besitzt die Porosität der Membran, da nur bei ausreichend hoher Porosität ausreichende Transferraten erzielt werden können.

Es befinden sich eine Reihe von Oxygenatoren im Einsatz, die Hohlfasermembranen mit offenporiger mikroporöser Struktur enthalten. Eine Möglichkeit, derartige Membranen für den Gasaustausch d.h. z.B. für die Oxygenation herzustellen, wird in der DE-A-28 33 493 beschrieben. Mit dem Verfahren gemäß dieser Schrift lassen sich Membranen aus schmelzeflüssigen thermoplastischen Polymeren mit bis zu 90 Vol.-% miteinander in Verbindung stehenden Poren herstellen. Das Verfahren basiert auf einem thermisch induzierten Phasenseparationsprozess mit flüssig-flüssig-Phasenseparation. Bei diesem Prozess wird zunächst eine homogene einphasige Lösung aus dem thermoplastischen Polymer und einer kompatiblen Komponente, die mit dem Polymer ein binäres System ausbildet, das im flüssigen Aggregatzustand einen Bereich völliger Mischbarkeit und einen Bereich mit Mischungslücke aufweist, hergestellt und diese Lösung dann in ein Bad extrudiert, das gegenüber dem Polymer im wesentlichen chemisch inert ist, d.h. im wesentlichen chemisch nicht mit ihm reagiert, und eine Temperatur unterhalb der Entmischungstemperatur besitzt. Hierdurch wird eine flüssig-flüssig-Phasentrennung eingeleitet und bei weiterer Abkühlung das thermoplastische Polymer zur Membranstruktur verfestigt.

Die Membranen gemäß der DE-A-28 33 493 weisen eine offenporige mikroporöse Struktur und auch offenporige mikroporöse Oberflächen auf. Dies hat zwar auf der einen Seite zur Folge, dass bei Gasaustauschprozessen gasförmige Stoffe, also beispielsweise Sauerstoff ($O_2$) oder Kohlendioxid ($CO_2$), relativ ungehindert durch die Membran hindurchtreten können und der Transport eines Gases als "Knudsen Fluss" erfolgt, verbunden mit relativ hohen Transferraten für Gase bzw. hohen Gasflüssen durch die Membran. So weisen derartige Membranen mit Gasflüssen für $CO_2$ von größer 1 ml/(cm$^2$*min*bar) und Gasflüssen für $O_2$ in etwa der gleichen Größe Gasflüsse auf, die für eine Oxygenation von Blut ausreichend groß sind.

Auf der anderen Seite jedoch kann bei längerem Einsatz dieser Membranen bei der Blutoxygenation oder allgemein bei Gasaustauschprozessen mit wässrigen Flüssigkeiten, auch wenn in diesen Fällen die Membranen aus hydrophoben Polymeren und insbesondere aus Polyolefinen hergestellt sind, Blutplasma bzw. ein Teil der Flüssigkeit in die Membran eindringen und im Extremfall auf der Gasseite der Membran austreten. Dies hat einen drastischen Abfall der Gastransferraten zur Folge. Bei Anwendungen im medizinischen Bereich der Blutoxygenation wird dies als Plasmadurchbruch bezeichnet.

Die Plasmadurchbruchzeit derartiger Membranen, wie sie gemäß DE-A-28 33 493 herstellbar sind, reicht zwar in den meisten Fällen der konventionellen Blutoxygenation aus, um einen Patienten bei einer normalen Operation am offenen Herzen zu oxygenieren. Jedoch sind diese Membranen wegen ihrer relativ kurzen Plasmadurchbruchzeiten für die sogenannte Langzeitoxygenation nicht geeignet. Auch für Gastrennaufgaben können derartige Membranen wegen ihrer durchgängigen Offenporigkeit nicht eingesetzt werden.

Im Bereich der Oxygenation besteht aber der Wunsch nach Membranen mit höherer Plasmadurchbruchzeit, um höhere Sicherheiten bei länger andauernden Herzoperationen zu erlangen und einen Plasmadurchbruch auszuschließen, der einen sofortigen Austausch des Oxygenators erforderlich machen würde. Ziel ist auch, beispielsweise Frühgeburten oder allgemein Patienten mit temporär eingeschränkter Lungenfunktion solange oxygenieren zu können, bis die Lungenfunktion wiederhergestellt ist, d.h. also Langzeitoxygenationen durchführen zu können. Hierfür sind entsprechend lange Plasmadurchbruchzeiten Voraussetzung. Ein in diesem Zusammenhang häufig geforderter Mindestwert für die Plasmadurchbruchzeit liegt bei mindestens 20 Stunden.

Aus der EP-A-299 381 sind Hohlfasermembranen zur Oxygenation bekannt, die Plasmadurchbruchzeiten von länger als 20 Stunden aufweisen, d.h. auch bei langandauerndem Einsatz keinen Plasmadurchbruch zeigen. Dies wird bei den ansonsten porösen Membranen durch eine Sperrschicht mit einer mittleren Dicke von nicht mehr als 2 $\mu m$ erreicht, die im wesentlichen für Ethanol undurchlässig ist. Die Membranen gemäß EP-A-299 381 weisen entsprechend den offenbarten Beispielen eine Porosität von maximal 31 Vol.-% auf, da bei höheren Porositäten die Poren über die Membranwand miteinander verbunden sind und eine Kommunikation zwischen den Seiten der Hohlfasermembranen erfolgt, was einen Plasmadurchbruch zur Folge hat.

Die Herstellung dieser Membranen erfolgt über ein Schmelz-Streckverfahren, d.h. das Polymer wird zunächst zu einer Hohlfaser schmelzextrudiert und anschließend warm- und kaltverstreckt. Hierbei werden nur relativ niedrige Porositäten erhalten, wodurch in Verbindung mit dem in der Sperrschicht auftretenden Transport über Lösungsdiffusion auch die erzielbaren Transferraten für Sauerstoff und Kohlendioxid relativ gering bleiben. Darüber hinaus weisen die Hohlfasermembranen gemäß der EP-A-299 381 aufgrund der mit der Herstellung verbundenen starken Verstreckung zwar eine ausreichende Festigkeit, jedoch nur eine geringe Bruchdehnung auf. In nachfolgenden textilen Verarbeitungsschritten z.B. zur Herstellung von Hohlfasermatten, die sich für die Herstellung von Oxygenatoren mit guter Austauschleistung bestens bewährt haben und wie sie beispielsweise in der EP-A-285 812 beschrieben werden, lassen sich daher diese Hohlfasermembranen nur schlecht verarbeiten.

Die US-A 4 664 681 offenbart Polyolefinmembranen insbesondere zu Gastrennungen mit einer mikroporösen Schicht und einer nicht-porösen Trennschicht, die ebenfalls nach einem Schmelz-Streckverfahren hergestellt werden. Hinsichtlich ihrer Eigenschaften sind diese Membranen ähnlich denjenigen, die in der EP-A-299 381 beschrieben werden.

Typischerweise entstehen bei Schmelz-Streckverfahren Membranen mit schlitzförmigen Poren mit ausgeprägter Anisotropie, deren eine Haupterstreckung senkrecht zur Streckrichtung und deren zweite Haupterstreckung senkrecht zur Membranoberfläche liegt, d.h. bei Hohlfasermembranen zwischen Membranaußenoberfläche und Membraninnenoberfläche verläuft. Hierdurch erstrecken sich durch die Poren ausgebildete Kanäle relativ geradlinig zwischen den Oberflächen. Im Falle, dass z.B. infolge mechanischer Beschädigungen beim Spinnprozess Leckstellen in der Sperrschicht auftreten, existiert dann beispielsweise eine bevorzugte Richtung für den Fluss einer Flüssigkeit zwischen Innen- und Außenoberfläche oder umgekehrt, so dass dadurch ein Plasmadurchbruch begünstigt wird.

Die DE-C-27 37 745 bezieht sich auf mikroporöse Körper, deren Herstellung ebenfalls mittels eines Verfahres mit thermisch induzierter flüssig-flüssig-Phasenseparation erfolgt. Wenn bei der Herstellung der mikroporösen Körper die Polymerlösung auf ein Substrat, z.B. eine Metallplatte gegossen wird, können die mikroporösen Körper gemäß der DE-C-27 37 745 auch eine Oberflächenhaut mit nicht zellförmiger Struktur aufweisen, wobei die Dicke der Haut meistens annähernd gleich der Dicke einer einzelnen Zellwand ist. Die DE-C-27 37 745 sagt jedoch nichts darüber aus, dass derartige mikroporöse Körper mit einer Oberflächenhaut für Gasaustauschprozesse, insbesondere zur Langzeitoxygenation, oder für Gastrennprozesse einsetzbar sind. Darüber hinaus sind mittels der in der DE-C-27 37 745 beschriebenen Vorgehensweise Hohlfasermembranen nicht herstellbar.

In der WO 00/43113 sowie in der WO 00/43114 werden integral asymmetrische Polyolefinmembranen für den Gasaustausch, insbesondere für die Langzeitoxygenation, oder auch für die Gastrennung offenbart und Verfahren zu ihrer Herstellung beschrieben. Die Verfahren basieren ebenfalls auf einem thermisch induzierten Phasenseparationsprozess mit flüssig-flüssig-Phasenseparation. Die Membranen gemäß der WO 00/43113 bzw. gemäß der WO 00/43114 weisen eine Stützschicht mit einer schwammartigen, offenporigen mikroporösen Struktur auf und zu dieser Stützschicht benachbart an mindestens einer ihrer Oberflächen eine Trennschicht mit dichterer Struktur. Zur Erzeugung dieser Membranstruktur und insbesondere der Trennschicht wird bei den genannten Schriften für die Herstellung der eingesetzten Polyolefinlösungen von Lösemittelsystemen ausgegangen, die aus einer Mischung eines Lösers mit einem Nichtlöser für das Polyolefin bestehen, wobei die Eigenschaften des Lösers sowie des Nichtlösers speziellen Anforderungen genügen müssen. Nachteilig an den in diesen Schriften offenbarten Verfahren ist, dass stets Lösemittelsysteme verwendet werden müssen, die eine Mischung mehrerer Komponenten sind. Derartige Lösemittelsysteme sind erfahrungsgemäß aufwendig in der verfahrenstechnischen Aufarbeitung mit dem Ziel einer Wiederverwendung der einzelnen Komponenten.

Es ist daher Aufgabe der Erfindung, ein vereinfachtes Verfahren zur Verfügung zu stellen, mittels dessen integral asymmetrische Membranen mit mikroporöser Stützstruktur und einer Trennschicht mit dichterer Struktur auch in Gestalt von Hohlfasermembranen hergestellt werden können, die für den Gasaustausch geeignet sind und bei einer hohen Gasaustauschleistung über lange Zeiträume dicht sind gegen einen Durchbruch von hydrophilen Flüssigkeiten, insbesondere von Blutplasma, oder auch für die Gastrennung, wobei die Membranen gute Weiterverarbeitungseigenschaften aufweisen sollen.

Die Aufgabe wird gelöst durch ein Verfahren zur Herstellung einer integral asymmetrischen hydrophoben Membran mit einer schwammartigen, offenporigen mikroporösen Stützstruktur und einer Trennschicht mit gegenüber der Stützstruktur dichterer Struktur, wobei das Verfahren mindestens die Schritte umfasst:

a) Herstellung einer homogenen Lösung aus einem System von 20-90 Gew.-% einer Polymerkomponente aus mindestens einem Polyolefin und 80-10 Gew.-% eines Lösemittels für die Polymerkomponente, wobei das System bei erhöhten Temperaturen einen Bereich aufweist, in dem es als homogene Lösung vorliegt, und bei Abkühlung eine kritische Entmischungstemperatur, unterhalb der kritischen Entmischungstemperatur im flüssigen Aggregatzustand eine Mischungslücke sowie eine Erstarrungstemperatur,

b) Ausformen der Lösung zu einem Formkörper mit einer ersten Oberfläche und einer zweiten Oberfläche in einem Formwerkzeug, welches eine Werkzeugtemperatur oberhalb der kritischen Entmischungstemperatur aufweist,

c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt, wobei ein flüssiges Abkühlmedium verwendet wird, welches die Polymerkomponente bei Temperaturen bis zur Werkzeugtemperatur nicht löst und chemisch nicht mit ihr reagiert,

d) gegebenenfalls Entfernen der polymerarmen Phase aus dem Formkörper, dadurch gekennzeichnet, dass als Lösemittel für die Polymerkomponente eine Verbindung oder eine Mischung von Verbindungen verwendet wird, wobei für jede Verbindung gilt, dass für eine Lösung von 25 Gew.-% der Polymerkomponente in dieser Verbindung bei Abkühlung mit einer Abkühlrate von 1°C/min die Entmischungstemperatur um 10 bis 70°C über der Erstarrungstemperatur liegt.

Überraschenderweise hat sich gezeigt, dass bei Einhaltung dieser Verfahrensbedingungen integral asymmetrische Membranen erhalten werden, bei denen mindestens eine Oberfläche als Trennschicht ausgebildet ist, die die daran angrenzende schwammartige, offenporige mikroporöse Stützschicht abdeckt und die gegenüber der Stützschicht eine dichtere Struktur aufweist. Mittels des erfindungsgemäßen Verfahrens lassen sich Trennschichten mit sehr dünnen Schichtdicken realisieren, deren Struktur von einer dichten Struktur bis hin zu einer nanoporösen Struktur mit Poren mit einer mittleren Porengröße von kleiner 100 nm, in Einzelfällen aber auch darüber hinaus eingestellt werden kann. Gleichzeitig weist die Stützschicht der so hergestellten Membranen eine hohe Volumenporosität auf.

Vorzugsweise werden mittels des erfindungsgemäßen Verfahrens integral asymmetrische Membranen mit einer dichten Trennschicht hergestellt. Unter einer dichten Trennschicht bzw. dichten Struktur wird hierbei eine solche Trennschicht bzw. Struktur verstanden, für die bei rasterelektronenmikroskopischer Untersuchung mit 60000-facher Vergrößerung keine Poren zu erkennen sind.

Das erfindungsgemäße Verfahren erlaubt also die Herstellung integral asymmetrischer Membranen mit einer gegenüber einem Flüssigkeitsdurchbruch über lange Zeiträume dichten, jedoch gasdurchlässigen Trennschicht und einer Stützschicht mit hoher Volumenporosität, wodurch für diese Membranen in Gastransferprozessen gleichzeitig hohe Gastransferleistungen resultieren. Diese Membranen lassen sich hervorragend zur Langzeitoxygenation von Blut einsetzen, wobei die Trennschicht dieser Membranen dafür verantwortlich zeichnet, dass diese Membranen über lange Zeiträume gegenüber dem Durchbruch von Blutplasma dicht sind. Gleichzeitig können Membranen mit dichter Trennschicht hergestellt werden, für die sich hohe Gastrennfaktoren erzielen lassen und die für die Gastrennung einsetzbar sind.

Im Sinne der vorliegenden Erfindung wird unter einer integral asymmetrischen Membran eine Membran verstanden, bei der Trennschicht und Stützschicht aus dem gleichen Material bestehen und zusammen unmittelbar bei der Membranherstellung ausgebildet wurden. Hierdurch sind beide Schichten als integrale Einheit miteinander verbunden. Beim Übergang von der Trennschicht zur Stützschicht erfolgt allein eine Änderung in Bezug auf die Membranstruktur. Einen Gegensatz dazu bilden beispielsweise Composit-Membranen, die einen mehrschichtigen Aufbau aufweisen, indem auf einer porösen, oftmals mikroporösen Stützschicht oder Stützmembran in einem separaten Verfahrensschritt eine dichte Schicht als Trennschicht aufgebracht ist. Dies hat zur Folge, dass die Materialien, die die Stützschicht und die Trennschicht aufbauen, bei Composit-Membranen auch unterschiedliche Eigenschaften aufweisen.

Das erfindungsgemäße Verfahren beruht auf einem thermisch induzierten Phasenseparationsprozess mit flüssig-flüssig-Phasentrennung. Erfindungsgemäß bilden die Polymerkomponente und das Lösemittel ein binäres System, das im flüssigen Aggregatzustand einen Bereich aufweist, in dem das System als homogene Lösung vorliegt, und einen Bereich, in dem es im flüssigen Aggregatzustand eine Mischungslücke besitzt. Wird ein solches System aus dem Bereich, in dem es als homogene Lösung vorliegt, unter die kritische Entmischungs- oder Phasentrenntemperatur abgekühlt, so tritt zunächst eine flüssig-flüssig Entmischung bzw. Phasentrennung in zwei flüssige Phasen auf, nämlich in eine polymerreiche und eine polymerarme Phase. Bei weiterer Abkühlung bis unter die Erstarrungstemperatur erstarrt die polymerreiche Phase zur dreidimensionalen Membranstruktur. Die Abkühlgeschwindigkeit hat dabei einen wesentlichen Einfluss auf die entstehende Porenstruktur. Ist die Abkühlgeschwindigkeit genügend groß, dass die flüssig-flüssig-Phasentrennung nicht unter thermodynamischen Gleichgewichtsbedingungen erfolgen kann sondern unter thermodynamischen Nichtgleichgewichtsbedingungen, jedoch andererseits dennoch relativ langsam, erfolgt die flüssig-flüssig-Phasentrennung etwa gleichzeitig mit der Ausbildung einer Vielzahl von Flüssigkeitströpfchen von im wesentlichen gleicher Größe. Das resultierende Polymergebilde weist dann eine schwammartige zellförmige und offenporige Mikrostruktur auf. Ist die Abkühlgeschwindigkeit deutlich höher, so wird das Polymer fest, bevor sich die meisten Flüssigkeitströpfchen ausbilden können. Hierbei entstehen dann schwammartige Strukturen mit netzwerkartigen oder korallenförmigen Mikrostrukturen. Die verschiedenartige Ausbildung solcher schwammartiger mikroporöser Strukturen über Prozesse mit thermisch induzierter flüssig-flüssig-Phasentrennung werden eingehend in der DE-C-27 37 745 beschrieben, auf deren Offenbarung sich ausdrücklich bezogen wird, und z.B. in R.E. Kesting: "Synthetic Polymeric Membranes", John Wiley & Sons, 1985, S. 261-264, dargestellt.

Generell ist als Lösemittel eine Verbindung anzusehen, in der die Polymerkomponente bei Erwärmen bis höchstens zum Siedepunkt dieser Verbindung zu einer homogenen Lösung vollständig gelöst wird. Im Rahmen der vorliegenden Erfindung ist dabei ein solches Lösemittel für das mindestens eine Polymer zu verwenden, bei dem für eine Lösung von 25 Gew.-% der Polymerkomponente in diesem Lösemittel bei Abkühlung mit einer Abkühlrate von 1°C/min die Entmischungstemperatur um 10 bis 70°C über der Erstarrungstemperatur liegt. Derartige Lösemittel können als schwache Lösemittel für die Polymerkomponente eingeordnet werden. Als ein starkes Lösemittel wäre dann ein solches Lösemittel zu bezeichnen, bei dem für eine Lösung von 25 Gew.-% der Polymerkomponente in diesem Lösemittel bei Abkühlung mit einer Abkühlrate von 1°C/min die Entmischungstemperatur um höchstens ca. 5°C über der Erstarrungstemperatur liegt.

Es hat sich gezeigt, dass bei Verwendung eines zu starken Lösemittels, für welches die Differenz zwischen Entmischungstemperatur und Erstarrungstemperatur weniger als 10°C beträgt und welches zu vergleichsweise niedrigen Erstarrungstemperaturen führt, die Ausbildung spärolithischer bzw. partikelförmiger Strukturen und z.T. fehlerhafter Trennschichten begünstigt wird. Diese nicht-erfindungsgemäßen Strukturen besitzen einen Aufbau aus partikelförmigen Strukturelementen mit z.T. rosettenförmigem oder lamellenartigem Aufbau, wobei die Strukturelemente über lamellenartige oder fibrilläre Stege miteinander verbunden sind. Die mit den genannten, nicht-erfindungsgemäßen Lösemitteln hergestellten Membranen weisen dann keine schwammartige offenporige mikroporöse Stützstruktur mehr auf und besitzen darüber hinaus keine ausreichende mechanische Stabilität für die praktische Anwendung. Andererseits kann die Verwendung zu schwacher Lösemittel dazu führen, dass keine fehlerfreie Trennschicht ausgebildet wird, sondern dass die Trennschicht größere Löcher oder Spalten aufweist.

Vorzugsweise liegt die Entmischungstemperatur um 20 bis 50°C über der Erstarrungstemperatur und besonders bevorzugt um 25 bis 45°C.

Die Entmischungs- oder Phasentrenntemperatur sowie die Erstarrungstemperatur können dabei auf einfache Weise festgestellt werden, indem zunächst eine homogene Lösung von 25 Gew.-% der Polymerkomponente in dem zu untersuchenden Lösemittel hergestellt wird und diese dann auf eine Temperatur aufgeheizt wird, die ca. 20°C oberhalb der Lösetemperatur liegt. Diese Lösung wird ca. 0,5 Std. unter Rühren auf dieser Temperatur gehalten, um eine hinreichende Homogenität zu gewährleisten. Anschließend wird die Lösung mit einer Abkühlrate von 1°C/min unter Rühren abgekühlt. Als Phasentrenntemperatur wird dabei die Temperatur bestimmt, bei der visuell eine beginnende Trübung feststellbar ist. Bei weiterer Abkühlung tritt ein Festwerden der polymerreichen Phase ein, beginnend mit dem Auftreten einzelner Polymerpartikel. Als Erstarrungstemperatur wird dann diejenige Temperatur bezeichnet, bei der im wesentlichen die Gesamtheit der polymerreichen Phase erstarrt ist.

Die Ausbildung von Spärolithstrukturen bzw. von partikelförmigen Strukturen wurde besonders auch dann beobachtet, wenn Polyolefine mit hoher Dichte eingesetzt wurden. Offenbar neigen bei Durchführung des erfindungsgemäßen Verfahrens Polyolefine mit hoher Dichte stärker zu einer Ausbildung spärolithischer oder partikelförmiger Strukturen. Es wird vermutet, dass sich dann das Kristallisationsverhalten wie z.B. die Kristallisationsgeschwindigkeit, in zunehmendem Maße auf die Ausbildung der Membranstruktur auswirkt. Vorzugsweise wird daher als Polymerkomponente eine solche mit einer Dichte von $\leq 910$ kg/m$^3$ eingesetzt.

Erfindungsgemäß wird als Polymerkomponente mindestens ein Polyolefin eingesetzt. Hierbei kann es sich bei der Polymerkomponente um ein einzelnes Polyolefin oder um eine Mischung aus mehreren Polyolefinen handeln, wobei zu den Polyolefinen auch Polyolefincopolymere oder modifizierte Polyolefine zu rechnen sind. Mischungen aus verschiedenen Polyolefinen sind hierbei insofern interessant, als dadurch verschiedene Eigenschaften wie z.B. Permeabilitäten oder mechanische Eigenschaften optimiert werden können. So lässt sich z.B. durch Zugabe bereits geringer Mengen eines Polyolefins mit ultrahohem Molekulargewicht, also beispielsweise mit einem Molekulargewicht von mehr als 10$^6$ Dalton, ein starker Einfluss auf die mechanischen Eigenschaften nehmen. Voraussetzung ist dabei natürlich, dass die dabei eingesetzten Polyolefine zusammen in dem verwendeten Lösemittel löslich sind. Im Falle, dass Mischungen aus mehreren Polyolefinen für die Polymerkomponente eingesetzt werden, weist in einer besonders bevorzugten Ausführungsform jedes in der Mischung enthaltene Polyolefin eine Dichte von < 910 kg/m$^3$ auf.

Bevorzugt besteht das in der Polymerkomponente enthaltene mindestens eine Polyolefin ausschließlich aus Kohlenstoff und Wasserstoff. Besonders bevorzugte Polyolefine sind Polypropylen und Poly(4-methyl-1-penten) oder Mischungen dieser Polyolefine untereinander. Von besonderem Vorteil ist die Verwendung von Poly(4-methyl-1-penten). Hiermit lassen sich besonders dichte Trennschichten und hohe Gastransferraten bei guten mechanischen Eigenschaften der Membranen realisieren.

Als Lösemittel sind solche Verbindungen einzusetzen, die die genannten Bedingungen erfüllen. Im Falle der besonders bevorzugten Verwendung von Polypropylen als Polymerkomponente werden vorzugsweise als Lösemittel N,N-Bis(2-hydroxyethyl)talgfettamin, Dioctylphthalat oder eine Mischung hieraus eingesetzt. Beim besonders bevorzugten Einsatz von Poly-(4-methyl-1-penten) als Polyolefin kommen als Lösemittel vorzugsweise Palmkernöl, Dibutylphthalat, Dioctylphthalat, Dibenzylether, Kokosöl oder eine Mischung hieraus in Frage, wobei besonders dichte Trennschichten bei Einsatz von Dibutylphthalat oder Dibenzylether erhalten werden.

Die zur Membranherstellung erforderlichen Anteile an Polymerkomponente und an Lösemittel lassen sich durch Erstellung von Phasendiagrammen mittels einfacher Versuche ermitteln. Derartige Phasendiagramme können nach bekannten Methoden entwickelt werden, wie sie z.B. von C.A. Smolders, J.J. van Aartsen, A. Steenbergen, Kolloid-Z. und Z. Polymere, 243 (1971), S. 14-20, beschrieben werden.

Bevorzugt liegt der Polymeranteil des Systems, aus dem die Lösung ausgebildet wird, bei 30-60 Gew.-% und der Anteil des Lösemittels bei 70-40 Gew.-%. Besonders bevorzugt liegt der Polymeranteil bei 35-50 Gew.-% und der Anteil des Lösemittels bei 65-50 Gew.-%. Gegebenenfalls können der Polymerkomponente, dem Lösemittel oder auch der Polymerlösung weitere Stoffe wie z.B. Antioxidantien, Keimbildungsmittel, Füllstoffe, Komponenten zur Verbesserung der Biokompatibilität, d.h. der Blutverträglichkeit bei Einsatz der Membran bei der Oxygenation, z.B. Vitamin E, und ähnliche als Additive zugegeben werden.

Die aus der Polymerkomponente und dem Lösemittel ausgebildete Polymerlösung wird mittels geeigneter Formwerkzeuge zum Formkörper ausgeformt. Vorzugsweise hat der Formkörper die Gestalt eines Films oder Hohlfadens, und die schließlich daraus hergestellte Membran ist eine Flachmembran bzw. eine Hohlfasermembran. Dabei können übliche Formwerkzeuge wie Breitschlitzdüsen, Gießkästen, Rakel, profilierte Düsen, Ringschlitzdüsen oder Hohlfadendüsen eingesetzt werden.

In einer bevorzugten Ausführung werden mittels des erfindungsgemäßen Verfahren Hohlfasermembranen hergestellt. Im diesem Fall wird die Polymerlösung durch den Ringspalt der entsprechenden Hohlfadendüse zum Formkörper, d.h. zum Hohlfaden extrudiert. Durch die zentrale Bohrung der Hohlfadendüse wird ein Fluid dosiert, das als Innenfüllung fungiert und das Lumen der Hohlfasermembran ausbildet und stabilisiert. Der extrudierte Hohlfaden bzw. die resultierende Hohlfasermembran weist dann eine dem Lumen zugewandte Oberfläche, die Innenoberfläche, und eine dem Lumen abgewandte, durch die Wand des Hohlfadens bzw. der Hohlfasermembran von der Innenoberfläche getrennte Oberfläche, die Außenoberfläche auf.

Nach seiner Ausformung wird der Formkörper so mittels des erfindungsgemäß eingesetzten flüssigen Abkühlmediums abgekühlt, dass eine thermodynamische Nichtgleichgewichts-flüssig-flüssig-Phasentrennung im Formkörper, d.h. in der ausgeformten Polymerlösung erfolgt und im weiteren die Polymerstruktur erstarrt und verfestigt. Dabei ist das Abkühlmedium auf eine Temperatur unterhalb der Erstarrungstemperatur temperiert. Erfindungsgemäß ist zur Erzeugung der gewünschten integral asymmetrischen Membran mit Trennschicht als Abkühlmedium ein flüssiges Abkühlmedium einzusetzen, das die Polymerkomponente auch bei Aufheizen des Mediums auf die Werkzeugtemperatur nicht löst und chemisch nicht mit ihm reagiert. Die Verwendung eines derartigen Abkühlmediums ist maßgeblich mit verantwortlich für die Ausbildung einer Trennschicht mit dichterer Struktur. Eine derartige Anforderung an das Abkühlmedium schließt z.B. den Einsatz des erfindungsgemäß verwendeten Lösemittels als Abkühlmedium aus. Dieses würde zwar die Polymerkomponente bei der Abkühltemperatur nicht lösen. Bei der Werkzeugtemperatur jedoch bildet dieses Lösemittel mit der Polymerkomponente, wie oben ausgeführt, eine homogene Lösung aus.

Bevorzugt ist die als Abkühlmedium eingesetzte Flüssigkeit ein Nichtlöser für die polymerkomponente, d.h. sie löst die Polymerkomponente beim Erwärmen bis höchstens zu ihrem Siedepunkt nicht zu einer homogenen Lösung. Die als Abkühlmedium eingesetzte Flüssigkeit kann auch eine Komponente enthalten, die ein Löser für die Polymerkomponente ist, oder sie kann auch eine Mischurig aus verschiedenen Nichtlösern sein, solange sie insgesamt die Polymerkomponente bei Temperaturen bis mindestens zur Werkzeugtemperatur nicht löst. Hierbei ist zu beobachten, dass die Stärke des Nichtlösecharakters des Abkühlmediums die Dichtheit der sich ausbildenden Trennschicht beeinflusst. In einer besonders bevorzugten Ausführung des erfindungsgemäßen Verfahrens wird daher als Abkühlmedium eine Flüssigkeit ver wendet, welche ein starker Nichtlöser für die Polymerkomponente ist. Hierbei wird im Rahmen der vorliegenden Erfindung die Stärke eines Nichtlösers beurteilt anhand der Differenz zwischen der Entmischungstemperatur einer aus der Polymerkomponente und einem starken Löser bestehenden Lösung, und der Entmischungstemperatur einer Lösung, enthaltend als Lösemittel den gleichen Lösersowie 10 Gew.-% des zu untersuchenden Nichtlösers. Die Konzentration der Polymerkomponente liegt in beiden Fällen bei 25 Gew.%. Unter einem starken Nichtlöser wird dann ein solcher verstanden, der zu einer Erhöhung der Entmischungstemperatur von mindestens 10% gegenüber der Entmischungstemperatur der entsprechenden, nur aus Löser und der Polymerkomponente bestehenden Lösung führt.

Vorzugsweise ist das Abkühlmedium bei der Abkühltemperatur eine homogene, einphasige Flüssigkeit. Hierdurch ist die Herstellung von Membranen mit besonders homogenen Oberflächenstrukturen gewährleistet.

Als flüssiges Abkühlmedium kann ein solches eingesetzt werden, welches mit dem Lösemittel zu einer homogenen Lösung mischbar ist oder ein solches, in welchem das Lösemittel sich nicht löst. Vorteilhafterweise ist das Abkühlmedium eine Flüssigkeit, die ein starker Nichtlöser für die Polymerkomponente ist und die bei der Abkühltemperatur mit dem Lösemittel homogen mischbar ist, d.h. in der sich das Lösemittel bei Abkühltemperatur löst.

Zur Einleitung einer thermodynamischen Nichtgleichgewichts-flüssig-flüssig-Phasentrennung muss die Temperatur des Abkühlmediums deutlich unterhalb der kritischen Entmischungstemperatur oder Phasentrenntemperatur des verwendeten Systems aus Polymerkomponente und Lösemittel und zur Erstarrung der polymerreichen Phase unterhalb der Erstarrungstemperatur liegen. Hierbei wird die Ausbildung der Trennschicht unterstützt, wenn ein möglichst großer Abstand zwischen der Entmischungstemperatur und der Temperatur des Abkühlmediums besteht. Vorzugsweise weist das Abkühlmedium eine Temperatur auf, die um mindestens 100°C unterhalb der Phasentrenntemperatur liegt, und besonders bevorzugt eine Temperatur, die um mindestens 150°C unterhalb der Phasentrenntemperatur liegt. Es ist von besonderem Vorteil, wenn dabei die Temperatur des Abkühlmediums kleiner als 50°C ist. In Einzelfällen kann eine Kühlung auf Temperaturen unterhalb der Raumtemperatur erforderlich sein. Es ist auch möglich, die Abkühlung abgestuft in mehreren Schritten durchzuführen.

Das flüssige Abkühlmedium, in das der Formkörper zur Abkühlung eingetaucht wird und durch das er in der Regel hindurchgeführt wird, kann sich beispielsweise in einem wannenförmigen Behälter befinden. Vorzugsweise befindet sich das flüssige Abkühlmedium in einem Schacht oder in einem Spinnrohr, den bzw. das der Formkörper zur Abkühlung dann durchläuft. Hierbei werden das Abkühlmedium und der Formkörper in der Regel in die gleiche Richtung durch den Schacht bzw. das Spinnrohr geführt. Formkörper und Abkühlmedium können mit gleicher oder unterschiedlicher linearer Geschwindigkeit durch das Spinnrohr geführt werden, wobei je nach Erfordernis entweder der Formkörper oder das Abkühlmedium die höhere lineare Geschwindigkeit aufweisen kann. Derartige Verfahrensvarianten werden beispielsweise in der DE-A-28 33 493 oder in der EP-A-133 882 beschrieben.

Die bei der Extrusion von Hohlfäden eingesetzte Innenfüllung kann gasförmig sein oder sie kann eine Flüssigkeit sein. Im Falle der Verwendung einer Flüssigkeit als Innenfüllung muss eine Flüssigkeit ausgewählt werden, welche die Polymerkomponente in der ausgeformten Polymerlösung unterhalb der kritischen Entmischungstemperatur der Polymerlösung im wesentlichen nicht löst. Im übrigen können die gleichen Flüssigkeiten zum Einsatz kommen, wie sie auch als Abkühlmedium verwendet werden können. Auf diese Weise lassen sich auch Hohlfasermembranen herstellen, die sowohl an ihrer Außenseite als auch an ihrer Innenseite eine Trennschicht aufweisen oder auch Hohlfasermembranen, die nur an ihrer Innenseite eine Trennschicht aufweisen. Bevorzugt handelt es sich bei der Innenfüllung dann um einen Nichtlöser für die Polymerkomponente und besonders bevorzugt um einen starken Nichtlöser für die Polymerkomponente. Die Innenfüllung kann dabei mit dem Lösemittel zu einer homogenen einphasigen Lösung mischbar sein. Im Falle, dass die Innenfüllung gasförmig ist, kann es sich um Luft, einen dampfförmigen Stoff oder bevorzugt um Stickstoff oder um andere Inertgase handeln.

Es ist von Vorteil, wenn Austrittsfläche des Formwerkzeugs und Oberfläche des Abkühlmediums durch einen Spalt räumlich beabstandet sind, der von dem Formkörper vor dem Kontakt mit dem Abkühlmedium durchlaufen wird. Es kann sich dabei um einen Luftspalt handeln, der Spalt kann aber auch mit einer anderen gasförmigen Atmosphäre gefüllt sein, und er kann auch beheizt oder gekühlt sein. Die Polymerlösung kann aber auch nach Austritt aus dem Formwerkzeug direkt mit dem Abkühlmedium in Kontakt gebracht werden.

In einer vorteilhaften Ausgestaltung des erfindungsgemäßen Verfahrens wird der aus dem Formwerkzeug austretende Formkörper vor der Abkühlung zumindest mit einer seiner Oberflächen, vorzugsweise mit derjenigen Oberfläche, an der die Trennschicht ausgebildet werden soll, einer die Verdampfung des Lösemittels fördernden gasförmigen Atmosphäre ausgesetzt, d.h. einer Atmosphäre, in der die Verdampfung des Lösemittels möglich ist. Bevorzugt wird zur Ausbildung der gasförmigen Atmosphäre Luft eingesetzt. Ebenso bevorzugt werden Stickstoff oder andere Inertgase eingesetzt oder auch dampfförmige Medien. Vorteilhafterweise ist die gasförmige Atmosphäre klimatisiert, und die gasförmige Atmosphäre hat in der Regel eine Temperatur, die unterhalb der Werkzeugtemperatur liegt. Um dabei einen genügenden Anteil an Lösemittel verdampfen zu können, wird der Formkörper mit zumindest einer seiner Oberflächen bevorzugt während mindestens 0,5 s der gasförmigen Atmosphäre ausgesetzt. Zur Bereitstellung der die Verdampfung des Lösemittels fördernden gasförmigen Atmosphäre genügt es oftmals, wenn Formwerkzeug und Abkühlmedium räumlich so beabstandet werden, dass sich dazwischen ein Spalt ausbildet, der die gasförmige Atmosphäre enthält und der vom Formkörper durchlaufen wird.

So kann etwa bei der Herstellung von Flachmembranen die z.B. durch eine Breitschlitzdüse extrudierte Polymerlösung als Flachfolie zunächst durch einen Spalt geführt werden, beispielsweise durch einen Luftspalt, bevor sie abgekühlt wird. In diesem Fall wird die Flachfolie allseitig, d.h. mit ihren beiden Oberflächen sowie ihren Seitenkanten von der gasförmigen Atmosphäre umgeben, und es wird bei der resultierenden Flachmembran an ihren beiden Oberflächen die Ausbildung der Trennschicht beeinflusst.

Im Falle der Herstellung von Hohlfasermembranen kann der die Düse verlassende Hohlfaden ebenfalls durch einen Spalt geführt werden, der zwischen Düse und Abkühlmedium ausgebildet ist und der die gasförmige Atmosphäre enthält.

Im Einzelfall kann die Struktur der Trennschicht auch durch einen Verzug der ausgeformten Polymerlösung unterhalb der Düse, d.h. insbesondere im Luftspalt beeinflusst werden, wobei der Verzug durch Einstellung einer Differenz zwischen der Austrittsgeschwindigkeit der Polymerlösung aus dem Formwerkzeug und der Geschwindigkeit der ersten Abzugseinrichtung für den abgekühlten Formkörper erzeugt wird.

Nach Abkühlung und Verfestigung der Polymerstruktur wird das Lösemittel bzw. die polymerarme Phase in der Regel aus dem Formkörper entfernt. Die Entfernung kann beispielsweise durch Extraktion erfolgen. Vorzugsweise werden dabei solche Extraktionsmittel eingesetzt, die das Polymer bzw. die Polymere nicht lösen, die jedoch mischbar mit Lösemittel sind. Anschließend kann eine Trocknung bei erhöhten Temperaturen erforderlich sein, um das Extraktionsmittel aus der Membran zu entfernen.

Brauchbare Extraktionsmittel sind Aceton, Methanol, Ethanol und bevorzugt Isopropanol.

In manchen Fällen kann es auch zweckmäßig sein, das Lösemittel zumindest teilweise im Formkörper zu belassen. Auch weitere als Additive dem Lösemittel zugegebene Komponenten können in der Membranstruktur verbleiben und so ebenfalls z.B. als funktionelle Wirkflüssigkeiten dienen. Verschiedene Beispiele für funktionelle Wirkflüssigkeiten enthaltende mikroporöse Polymere werden in der DE-C 27 37 745 beschrieben.

Vor oder nach der Entfernung zumindest eines wesentlichen Teils des Lösemittels kann eine geringfügige Verstreckung der Membran erfolgen, um insbesondere die Eigenschaften der Trennschicht in gezielter Weise zu modifizieren. Beispielsweise können in einer im wesentlichen dichten Trennschicht durch die Verstreckung Poren erzeugt oder es kann die Größe von Poren in der Trennschicht auf die im speziellen Anwendungsfall der resultierenden Membran erforderliche Größe eingestellt werden.

Bei Herstellung von Membranen für die Langzeitoxygenation muss jedoch darauf geachtet werden, dass die Poren eine mittlere Porengröße von maximal 100 nm nicht überschreiten, damit ein früher Flüssigkeitsdurchbruch vermieden werden kann. Daher sollte bei Herstellung der erfindungsgemäßen Membranen die Verstreckung in der Regel 10 % nicht überschreiten. Die Verstreckung kann nach Erfordernis auch in mehrere Richtungen erfolgen und wird vorteilhafterweise unter erhöhten Temperaturen vorgenommen. Beispielsweise kann eine solche Verstreckung auch während einer gegebenenfalls erforderlichen Trocknung der Membran nach der Extraktion durchgeführt werden.

Durch Einstellung der Porengröße der Trennschicht z.B. über einen nachgeschalteten Verstreckungsschritt lassen sich mittels des erfindungsgemäßen Verfahrens also auch Membranen für die Nanofiltration oder für die Ultrafiltration herstellen.

Das erfindungsgemäße Verfahren lässt sich bevorzugt zur Herstellung einer hydrophoben integral asymmetrischen Membran insbesondere für die Gastrennung oder für den Gasaustausch einsetzen, wobei die Membran hauptsächlich aus mindestens einem Polyolefin besteht, eine erste und eine zweite Oberfläche aufweist sowie eine dazwischenliegende Stützschicht, die eine schwammartige, offenporige mikroporöse Struktur besitzt, und zu dieser Stützschicht benachbart an mindestens einer der Oberflächen eine Trennschicht mit dichterer Struktur, wobei die Trennschicht dicht ist oder höchstens Poren mit einem mittleren Durchmesser <100 nm aufweist, die Stützschicht frei von Makrovoids ist, die Poren in der Stützschicht im Mittel im wesentlichen isotrop sind und die Membran eine Porosität im Bereich von größer als 30 Vol.-% bis kleiner 75 Vol.-% aufweist. Daher betrifft die Erfindung des Weiteren eine derartige Membran, die mittels des erfindungsgemäßen Verfahrens herstellbar ist. Besonders bevorzugt weist die mittels des erfindungsgemäßen Verfahrens hergestellte Membran eine dichte Trennschicht auf.

Unter dem mittleren Durchmesser der Poren in der Trennschicht wird dabei der Mittelwert aus den Durchmessern der Poren in der Oberfläche verstanden, die als Trennschicht ausgebildet ist, wobei eine rasterelektronenmikroskopische Aufnahme bei 60000-facher Vergrößerung zugrunde gelegt wird. Bei der bildanalytischen Auswertung wird für die Poren eine kreisrunde Fläche angenommen. Der mittlere Porendurchmesser ergibt sich als arithmetischer Mittelwert aller auf einer Membranfläche von ca. 8 $\mu$m x 6 $\mu$m bei 60000-facher Vergrößerung sichtbaren Poren. Bei den erfindungsgemäßen bzw. bei den erfindungsgemäß hergestellten Membranen vorhandene Poren in der Oberfläche, die die Trennschicht aufweist, sind gleichmäßig, d.h. homogen über diese Oberfläche verteilt.

Diese Membranen zeichnen sich aufgrund ihrer Struktur bei Anwendung zum Gastransfer durch hohe Gasflüsse und hohe Gastransferraten bei gleichzeitig hoher Sicherheit gegenüber einem Durchbruch der Flüssigkeit, von der eine gasförmige Komponente abgetrennt oder der eine gasförmige Komponente hinzugefügt werden soll, sowie durch gute mechanische Eigenschaften aus. Hierzu weist die Membran eine hohe Volumenporosität auf, wobei diese im wesentlichen durch die Struktur der Stützschicht bestimmt ist, und eine definierte Trennschicht mit geringer Dicke.

Die Stützschicht der mittels des erfindungsgemäßen Verfahrens hergestellten bzw. der erfindungsgemäßen Membranen kann, wie bereits ausgeführt, von unterschiedlicher Struktur sein. In einer Ausführungsform weist die Stützschicht eine schwammartige zellförmige und offenporige Struktur auf, bei der die Poren als umschlossene Mikrozellen beschrieben werden können, die von Kanälen, kleineren Poren oder Durchlässen miteinander verbunden sind. In einer weiteren Ausführungsform weist die Stützschicht eine nicht-zellförmige Struktur auf, bei der die Polymerphase und die Poren sich durchdringende Netzwerkstrukturen ausbilden, die auch als korallenförmige Strukturen beschrieben werden können. In jedem Fall ist aber die Stützschicht frei von Makrovoids, also frei von solchen Poren, die in der Literatur auch häufig als Fingerporen oder Kavernen bezeichnet werden.

Die Poren der Stützschicht können jede beliebige Geometrie aufweisen und z.B. von länglicher, zylindrischer, runder Form oder auch von einer mehr oder weniger unregelmäßigen Gestalt sein. Bei den erfindungsgemäßen bzw. den mittels des erfindungsgemäßen Verfahrens hergestellten Membranen sind die Poren in der Stützstruktur im Mittel im wesentlichen isotrop. Hierunter ist zu verstehen, dass, wenngleich die einzelnen Poren auch eine längliche Form besitzen können, über alle Poren gemittelt die Poren in alle Raumrichtungen im wesentlichen gleiche Ausdehnung aufweisen, wobei Abweichungen zwischen den Ausdehnungen in den einzelnen Raumrichtungen von bis zu 20% eingeschlossen sind.

Bei einer zu geringen Volumenporosität, d.h. einem zu geringen Anteil an Poren bezogen auf das Gesamtvolumen der Membran sind die erreichbaren Gasflüsse und Gastransferraten zu gering. Andererseits führt ein zu hoher Anteil an Poren in der Membran zu mangelhaften mechanischen Eigenschaften, und die Membran lässt sich in nachfolgenden Verarbeitungprozessen nicht mehr problemlos verarbeiten. Mittels des erfindungsgemäßen Verfahrens lassen sich vorzugsweise Membranen mit einer Volumenporosität im Bereich von größer als 30 Vol.-% bis kleiner als 75 Vol.-%, und besonders bevorzugt im Bereich von größer als 50 Vol.-% bis kleiner als 65 Vol.-% herstellen.

Dabei können die Membranen nur an einer ihrer Oberflächen eine Trennschicht aufweisen, sie können jedoch auch an ihren beiden Oberflächen eine Trennschicht aufweisen. Die Trennschicht hat einerseits Einfuss auf die Gasflüsse und die Gastransferraten, anderseits aber auch auf die Durchbruchzeit, d.h. auf die Zeitspanne, die die Membran gegenüber einem Durchbruch der Flüssigkeit, von der bei Anwendung der erfindungsgemäßen Membran eine gasförmige Komponente abgetrennt oder der eine gasförmige Komponente hinzugefügt werden soll, oder gegenüber einem Durchbruch von in der Flüssigkeit enthaltenen Komponenten sicher ist. Sie hat darüber hinaus auch Einfluss darauf, ob und wie gut verschiedene Gase aus einem Gasgemisch voneinander getrennt werden können, d.h. z.B. auf den Gastrennfaktor $\alpha(CO_2/N_2)$.

So resultieren bei einer nichtporösen dichten Trennschicht sehr lange Durchbruchzeiten, jedoch sind die Transferraten und die Gasflüsse in ihrer Größe begrenzt, da in nichtporösen Membranschichten der Gastransfer bzw. der Gasfluss allein über eine vergleichsweise langsame Lösungs-Diffusion erfolgt im Unterschied zum wesentlich größeren "Knudsen Fluss" in porösen Strukturen. Im Falle einer nanoporösen Trennschicht hingegen sind die Gastransferraten und die Gasflüsse gegenüber einer dichten Trennschicht erhöht, jedoch können sich aufgrund der Poren dann kürzere Durchbruchzeiten ergeben.

Die Dichtigkeit der Trennschicht und ihre Eignung insbesondere für den die Gastrennung oder für den Gastransfer kann oftmals nicht mit ausreichender Sicherheit allein aufgrund visueller Untersuchung z.B. mittels eines Rasterelektronenmikroskops beurteilt werden. Hierbei spielt nicht nur die Größe vorhandener Poren oder auch allgemein struktureller Fehlstellen wie z.B. Risse, sondern auch deren Anzahl eine Rolle. Die Abwesenheit bzw. das Vorhandensein von Poren bzw. von Fehlstellen sowie deren Anzahl kann jedoch beurteilt werden durch Untersuchung der Gaspermeation und der Gasflüsse durch die Membran sowie durch Untersuchung der Gastrennfaktoren.

Es ist allgemein bekannt, dass die grundlegenden Prinzipien des Transports von Gasen in Polymermembranen von der Porengröße in der Membran abhängen. Bei Membranen, bei denen die Trennschicht höchstens Poren bis zu einer Größe von ca. 2-3 nm aufweist, permeiert das Gas durch diese Membran über Lösungs-Diffusions-Mechanismen. Der Permeabilitätskoeffizient $P_0$ eines Gases ist dann allein abhängig vom Polymermaterial der Membran und vom Gas selbst, und der Gasfluss $Q_0$, d.h. der durch die Membrandicke dividierte Permeabilitätskoeffizient, ist für ein bestimmtes Gas nur abhängig von der Dicke der Trennschicht. Der Gastrennfaktor $\alpha$, der das Verhältnis der Permeabilitätskoeffizienten bzw. der Gasflüsse Q zweier Gase in dieser Membran angibt, wird damit ebenfalls abhängig allein vom Polymermaterial und nicht z.B. von der Dicke der Trennschicht. Der Gastrennfaktor z.B. für $CO_2$ und $N_2$ ergibt sich dann zu $\alpha_0(CO_2/N_2) = P_0(CO_2)/P_0(N_2)$. Für allgemein verwendete Polymere resultieren $\alpha_0(CO_2/N_2)$-Werte von mindestens 1, in der Regel von mindestens 3.

In porösen Membranen mit Poren einer Größe zwischen 2 nm und ca. 10 $\mu$m erfolgt der Transport von Gasen hauptsächlich über "Knudsen Fluss". Die dann für Gase ermittelten Gastrennfaktoren $\alpha_1$ als Verhältnis der gemessenen scheinbaren Permeabilitätskoeffizienten sind dann umgekehrt proportional zur Wurzel aus dem Verhältnis der Molekulargewichte der Gase. Für $\alpha_1(CO_2/N_2)$ ergibt sich also z.B. $\sqrt{28/44}$ = 0,798.

Permeiert ein Gas durch die Membranen der vorliegenden Erfindung mit einer mikroporösen Stützstruktur und einer gegenüber dieser dichteren Trennschicht mit Poren einer mittleren Größe von <100 nm, so wird die Permeation durch die Trennschicht der geschwindigkeitsbestimmende Schritt. Wenn in dieser Trennschicht eine nennenswerte Anzahl von Poren oder Fehlstellen auftritt, so nehmen auf der einen Seite die scheinbaren Permeabilitätskoeffizienten zu, auf der anderen Seite nimmt jedoch der Gastrennfaktor ab. Daher kann die Anwesenheit oder die Abwesenheit von Poren und/oder Fehlstellen in der Trennschicht der erfindungsgemäßen Membranen abgelesen werden anhand der gemessenen Gastrennfaktoren für $CO_2$ und $N_2$, $\alpha(CO_2/N_2)$. Wenn der $CO_2/N_2$-Gastrennfaktor $\alpha(CO_2/N_2)$ wesentlich kleiner als 1 wird, weist die Membran eine große Anzahl an Poren oder Fehlstellen in der Trennschicht auf. Bei Vorliegen einer zu hohen Anzahl von Poren oder Fehlstellen in der Trennschicht kann jedoch ein zu früher Flüssigkeitsdurchbruch bzw. Plasmadurchbruch nicht mehr mit genügender Sicherheit ausgeschlossen werden und die Membranen sind für einen Langzeiteinsatz in der Blutoxygenation nicht geeignet. Ebensowenig können derartige Membranen für Anwendungen im Bereich der Gasseparation eingesetzt werden. Die erfindungsgemäßen Membranen weisen daher bevorzugt einen Gastrennfaktor $\alpha(CO_2/N_2)$ von mindestens 1 und besonders bevorzugt von mindestens 2 auf.

Die Dicke der Trennschicht darf nicht zu gering sein, da hierdurch die Gefahr für Fehlstellen und damit für einen Durchbruch erhöht wird und die $\alpha(CO_2/N_2)$-Werte zu gering werden. Allerdings ist auch dann die Zeit bis zum tatsächlichen Durchbruch dennoch relativ lang, da bei den erfindungsgemäßen Membranen keine bevorzugte Richtung für den Fluss einer Flüssigkeit vorliegt, sondern der von der Flüssigkeit zurückzulegende Weg aufgrund der Porenstruktur sehr gewunden ist. Im Unterschied hierzu sind die Membranen zu sehen, die nach dem erwähnten Schmelz-Streckverfahren hergestellt sind und bei denen aufgrund der ausgeprägten Anisotropie der Poren eine bevorzugte Richtung für den Fluss von Flüssigkeiten von der einen Oberfläche zur anderen resultiert.

Während bei zu geringen Dicken der Trennschicht die Gefahr für Fehlstellen zu groß wird, werden andererseits bei einer zu großen Trennschichtdicke die Transferraten und die Gasflüsse zu gering. Bevorzugt liegt daher die Dicke der Trennschicht zwischen 0,01 $\mu$m und 5 $\mu$m und besonders bevorzugt zwischen 0,1 $\mu$m und 2 $\mu$m. Hervorragend geeignet sind erfindungsgemäße Membranen mit einer Trennschichtdicke zwischen 0,1 $\mu$m und 0,6 $\mu$m. Die Dicke der Trennschicht kann für die erfindungsgemäßen Membranen auf einfache Weise durch Ausmessen der Schicht anhand von mittels Rasterelektronenmikroskopie erstellten Bruchbildern oder mittels Transmissionselektronenmikroskopie erstellten Ultradünnschnittcharakterisierungen ermittelt werden. Damit lassen sich in Verbindung mit der hohen Porosität der Membranen eine für den Einsatz zur Blutoxygenation genügend hohe Permeabilität der Membranen und damit genügend hohe Gasflüsse erzielen. Bevorzugt weisen daher die erfindungsgemäßen Membranen einen Gasfluss Q für $CO_2$, $Q(CO_2)$, von mindestens 1 ml/(cm$^2$*min*bar) auf.

Eine wichtige Anwendung der mittels des erfindungsgemäßen Verfahrens herstellbaren Membranen ist die Oxygenation von Blut. Bei diesen Anwendungen spielt, wie bereits ausgeführt wurde, die Plasmadurchbruchzeit eine Rolle, d.h. die Zeit, die die Membran gegenüber einem Durchbruch von Blutplasma stabil ist. Hierbei ist hervorzuheben, dass ein Plasmadurchbruch ein wesentlich komplexerer Vorgang ist als das bloße Durchdringen einer hydrophilen Flüssigkeit durch eine hydrophobe Membran. Nach gängiger Lehrmeinung wird ein Plasmadurchbruch dadurch hervorgerufen, dass zunächst durch im Blut enthaltene Proteine und Phospholipide eine Hydrophilierung des Porensystems der Membran erfolgt und in einem nachgelagerten Schritt schlagartig ein Eindringen von Blutplasma in das hydrophilierte Porensystem stattfindet. Als kritische Größe für einen Flüssigkeitsdurchbruch wird daher die Plasmadurchbruchzeit angesehen. Die erfindungsgemäßen Membranen weisen bevorzugt eine Plasmadurchbruchzeit von mindestens 20 Stunden, besonders bevorzugt eine Plasmadurchbruchzeit von mindestens 48 Stunden auf.

Generell erfolgt bei den Membranen der vorliegenden Erfindung der Übergang von der porösen Stützschicht zur Trennschicht in einem engen Bereich der Membranwand. Bei einer bevorzugten Ausführungsform ändert sich die Membranstruktur beim Übergang von der Trennschicht zur Stützschicht abrupt, d.h. die Membranstruktur wechselt im wesentlichen übergangslos und sprunghaft von der mikroporösen Stützschicht zur Trennschicht. Membranen mit einer derartigen Struktur weisen gegenüber solchen Membranen mit einem langsamen, graduellen Übergang von der Trennschicht zur Stützschicht den Vorteil einer höheren Durchlässigkeit der Stützschicht für zu transferierenden Gase aus, da die Stützschicht in ihrem an die Trennschicht angrenzenden Bereich weniger kompakt ist.

In einer bevorzugten Ausführungsform sind die mittels des erfindungsgemäßen Verfahrens hergestellten Membranen Flachmembranen, wobei diese vorzugsweise eine Dicke zwischen 10 und 300 $\mu$m, besonders bevorzugt zwischen 30 und 150 $\mu$m besitzen. In einer ebenfalls bevorzugten Ausführungsform sind die Membranen Hohlfasermembranen. Je nach Ausführung können diese eine Trennschicht nur an ihrer Innenoberfläche, d.h. an ihrer dem Lumen zugewandten Oberfläche, oder nur an ihrer Außenoberfläche, d.h. der dem Lumen abgewandten Oberfläche aufweisen oder aber sowohl an ihrer Innenoberfläche als auch an ihrer Außenoberfläche eine Trennschicht besitzen. Vorzugsweise befindet sich die Trennschicht an der Außenoberfläche. Die Hohlfasermembranen weisen bevorzugt einen Außendurchmesser zwischen 30 und 3000 $\mu$m, besonders bevorzugt einen Außendurchmesser zwischen 50 und 500 $\mu$m auf. Günstig ist eine Wanddicke der Hohlfasermembran zwischen 5 und 150 $\mu$m, besonders günstig eine Dicke zwischen 10 und 100 $\mu$m. Die Hohlfasermembranen besitzen hervorragende mechanische Eigenschaften, insbesondere eine Bruchkraft von mindestens 70 cN und eine Bruchdehnung von mindestens 75%, wodurch eine problemlose Weiterverarbeitung in nachfolgenden textilen Verarbeitungsschritten möglich ist. So hat es sich bei Verwendung von Hohlfasermembranen als günstig in Bezug auf die Leistungscharakteristik daraus hergestellter Membranmodule erwiesen, wenn die Hohlfasermembranen zunächst beispielsweise mittels geeigneter Wirkverfahren zu Matten aus zueinander im wesentlichen parallelen Hohlfasermembranen verarbeitet werden, aus denen dann entsprechende Bündel hergestellt werden. Damit sind textile Verarbeitungsverfahren verbunden, die hohe Anforderungen an die mechanischen Eigenschaften der Membranen stellen, insbesondere an die Festigkeit und die Dehnung. Diese Anforderungen werden von den hergestellten Membranen erfüllt.

Die hergestellte Membran lässt sich in zahlreichen Anwendungsgebieten einsetzen, bei denen eine Membran mit einer Trennschicht erforderlich ist. Bevorzugte Verwendungen sind Verfahren zur Gastrennung, bei denen beispielsweise eine einzelne Gaskomponente selektiv aus einer Mischung von mindestens zwei Gasen abgetrennt wird, oder Verfahren zur Gasanreicherung, bei denen eine oder mehrere Gaskomponenten in einer Mischung von verschiedener Gase angereichert wird. Weiterhin lassen sich die erfindungsgemäßen bzw. die erfindungsgemäß hergestellten Membranen für Gastransferverfahren einsetzen, bei denen selektiv ein Gas, das in einer Flüssigkeit gelöst ist, aus dieser Flüssigkeit entfernt wird, und/oder ein Gas z.B. aus einer Mischung von Gasen in einer Flüssigkeit gelöst wird. Aufgrund ihrer hohen Plasmadichtigkeit, d.h. ihrer langen Plasmadurchbruchzeiten sowie ihrer hohen Gastransferleistungen für $O_2$ und $CO_2$ sind die Membranen hervorragend geeignet für den Einsatz in Oxygenatoren, d.h. für die Oxygenation von Blut und insbesondere für die Langzeitoxygenation von Blut. Auf der anderen Seite lassen sich mittels des erfindungsmäßen Verfahrens durch Einstellung der Porengröße der Trennschicht z.B. in einem nachgeschalteten Verstreckungsschritt bevorzugt auch Membranen für die Nanofiltration wie z.B. für die Abtrennung niedermolekularer Substanzen vor allem aus nicht-wässrigen Medien oder für die Ultrafiltration wie z.B. für die Behandlung von Frischwasser, Abwasser oder Prozesswasser oder auch für Anwendungen im Bereich der Lebensmittel-, der Getränke- oder der Milchindustrie herstellen. Die erfindungsgemäßen bzw. erfindungsgemäß hergestellten Membranen lassen sich des Weiteren in vorteilhafter Weise auch zur Abtrennung bzw. Rückgewinnung von Anästesiegasen einsetzen, die im Vergleich zu den in der Atemluft enthaltenen Gasen einen erheblich größeren Moleküldurchmesser aufweisen.

Die Erfindung soll anhand der nachfolgenden Beispiele und Figuren näher erläutert werden. Es zeigen:

Fig. 1: Rasterelektronenmikroskopische (REM-) Aufnahme der äußeren Oberfläche einer Hohlfasermembran gemäß Beispiel 1 bei 60000-facher Vergrößerung

Fig. 2: REM-Aufnahme der inneren Oberfläche einer Hohlfasermembran gemäß Beispiel 1 bei 13500-facher Vergrößerung

Fig. 3: REM-Aufnahme der Bruchfläche senkrecht zur Längsachse einer Hohlfasermembran gemäß Beispiel 1 im Bereich ihrer Außenseite bei 13500-facher Vergrößerung

Fig. 4: REM-Aufnahme der Bruchfläche senkrecht zur Längsachse einer Hohlfasermembran gemäß Beispiel 1 im Bereich ihrer Innenseite bei 13500-facher Vergrößerung

Fig. 5: REM-Aufnahme der äußeren Oberfläche einer Hohlfasermembran gemäß Beispiel 2 bei 60000-facher Vergrößerung

Fig. 6: REM-Aufnahme der inneren Oberfläche einer Hohlfasermembran gemäß Beispiel 2 bei 13500-facher Vergrößerung

Fig. 7: REM-Aufnahme der Bruchfläche senkrecht zur Längsachse einer Hohlfasermembran gemäß Beispiel 2 im Bereich ihrer Außenseite bei 13500-facher Vergrößerung

Fig. 8: REM-Aufnahme der äußeren Oberfläche einer Hohlfasermembran gemäß Beispiel 3 bei 60000-facher Vergrößerung

Fig. 9: REM-Aufnahme der inneren Oberfläche einer Hohlfasermembran gemäß Beispiel 3 bei 13500-facher Vergrößerung

Fig. 10: REM-Aufnahme der Bruchfläche senkrecht zur Längsachse einer Hohlfasermembran gemäß Beispiel 3 im Bereich ihrer Außenseite bei 13500-facher Vergrößerung

Fig. 11: REM-Aufnahme der äußeren Oberfläche einer Hohlfasermembran gemäß Beispiel 4 bei 60000-facher Vergrößerung

Fig. 12: REM-Aufnahme der inneren Oberfläche einer Hohlfasermembran gemäß Beispiel 4 bei 13500-facher Vergrößerung

Fig. 13: REM-Aufnahme der Bruchfläche senkrecht zur Längsachse einer Hohlfasermembran gemäß Beispiel 4 im Bereich ihrer Außenseite bei 13500-facher Vergrößerung

Fig. 14: REM-Aufnahme der äußeren Oberfläche einer Hohlfasermembran gemäß Vergleichsbeispiel 1 bei 60000-facher Vergrößerung

Fig. 15: REM-Aufnahme der inneren Oberfläche einer Hohlfasermembran gemäß Vergleichsbeispiel 1 bei 4500-facher Vergrößerung

Fig. 16: REM-Aufnahme der Bruchfläche senkrecht zur Längsachse einer Hohlfasermembran gemäß Vergleichsbeispiel 1 im Bereich ihrer Außenseite bei 13500-facher Vergrößerung

Fig. 17: REM-Aufnahme der Bruchfläche senkrecht zur Längsachse einer Hohlfasermembran gemäß Vergleichsbeispiel 1 im Bereich ihrer Innenseite bei 13500-facher Vergrößerung

In den Beispielen wurden die folgenden Methoden zur Charakterisierung der erhaltenen Membranen angewandt:

Bestimmung der Plasmadurchbruchzeit:

Zur Bestimmung der Plasmadurchbruchzeit wird eine auf 37°C temperierte Phospholipidlösung (1,5 g L-$\alpha$-Phosphatidy-LCholine in 500 ml physiologischer Kochsalzlösung gelöst) bei einem Druck von 1.0 bar mit einem Fluss von 6 l/(min*2m$^2$) an der einen Oberfläche einer Membranprobe entlanggeführt. An der anderen Oberfläche der Membranprobe wird Luft entlangströmen lassen, die nach Verlassen der Membranprobe durch eine Kühlfalle geleitet wird. Es wird das Gewicht der in der Kühlfalle gesammelten Flüssigkeit als Funktion der Zeit gemessen. Die Zeit, die bis zum signifikanten Ansteigen des Gewichts, d.h. bis zur ersten signifikanten Flüssigkeitsansammlung in der Kühlfalle vergeht, wird als Plasmadurchbruchzeit bezeichnet.

Bestimmung der Volumenporosität:

Eine Probe von mindestens 0,5 g der zu untersuchenden Membran wird trocken eingewogen. Die Membranprobe wird anschließend in eine das Membranmaterial benetzende, jedoch nicht quellende Flüssigkeit für 24 Stunden eingelegt, so dass die Flüssigkeit in alle Poren eindringt. Dies lässt sich visuell daran erkennen, dass die Membranprobe von einem opaken in einen glasigen, transparenten Zustand übergeht. Anschließend wird die Membranprobe aus der Flüssigkeit entnommen, an der Membranprobe anhaftende Flüssigkeit durch Zentrifugieren bei ca. 1800 g entfernt und die Masse der so vorbehandelten nassen, d.h. flüssigkeitsgefüllten Membranprobe bestimmt.

Die Volumenporosität in % wird nach folgender Formel bestimmt:

$$\text{Volumenporosität [\%]} = 100 * \frac{(m_{nass} - m_{trocken})/\rho_{Flüss.}}{(m_{nass} - m_{trocken})/\rho_{Flüss.} + m_{trocken}/\rho_{Polymer}}$$

wobei bedeuten:

$m_{trocken}$ = Gewicht der trockenen Membranprobe

$m_{nass}$ =      Gewicht der nassen, flüssigkeitsgefüllten Membranprobe

$\rho_{Flüss}$ =      Dichte der verwendeten Flüssigkeit

$\rho_{Polymer}$ =      Dichte des Membranpolymers

Bestimmung des Gasflusses:

Zur Bestimmung der Gasflüsse wird eine Membranprobe auf einer ihrer Seiten mit dem zu messenden Gas mit einem konstanten Prüfdruck von 2 bar beaufschlagt. Bei Hohlfasermembranen wird hierzu das Gas in das Lumen der Hohlfasermembran eingeleitet. Es wird der durch die Wand der Membranprobe hindurchtretende Volumenstrom des Gases ermittelt und bezüglich des Prüfdrucks sowie der vom Gas durchströmten Fläche der Membranprobe normiert. Bei Hohlfasermembranen wird hierbei die das Lumen umschließende Innenfläche der Membran eingesetzt.

Bestimmung des mittleren Durchmessers der Poren in der Trennschicht:

Die Bestimmung des mittleren Durchmessers der Poren in der Trennschicht erfolgt mit Hilfe eines bildanalytischen Verfahrens. Hierbei wird für die Poren eine kreisrunde Fläche angenommen. Der mittlere Porendurchmesser ergibt sich als arithmetischer Mittelwert aller auf einer Membranfläche von ca. 8 $\mu$m x 6 $\mu$m bei 60000-facher Vergrößerung sichtbaren Poren.

Beispiel 1:

Poly-(4-methyl-1-penten) wurde in einem Extruder stufenweise bei von 265°C auf 300°C ansteigenden Temperaturen aufgeschmolzen und mittels einer Zahnradpumpe kontinuierlich einem dynamischen Mischer zugeführt. Als Lösemittel wurde Dibutylphtalat (Palatinol C) eingesetzt und mittels einer Dosierpumpe ebenfalls dem Mischer zugeführt, in dem das Polymer zusammen mit dem Lösemittel bei einer Temperatur von 290°C zu einer homogenen Lösung mit einer Polymerkonzentration von 35 Gew.-% und einer Konzentration des Lösemittels von 65 Gew.-% verarbeitet wurde. Diese Lösung wurde einer Hohlfadendüse mit einem Außendurchmesser des Ringspalts von 1,2 mm zugeführt und oberhalb der Phasentrenntemperatur bei 240°C zu einem Hohlfaden extrudiert. Als Innenfüllung wurde Stickstoff verwendet. Nach einer Luftstrecke von 20 mm durchlief der Hohlfaden ein ca. 1 m langes Spinnrohr, welches von dem auf Raumtemperatur temperiertem Abkühlmedium durchströmt wurde. Als Abkühlmedium wurde Glycerintriacetat eingesetzt. Der infolge der Abkühlung im Spinnrohr verfestigte Hohlfaden wurde mit einer Abzugsgeschwindigkeit von 72 m/min aus dem Spinnrohr abgezogen, auf eine Spule aufgewickelt, anschließend zunächst mit Isopropanol extrahiert und danach bei ca. 120°C getrocknet.

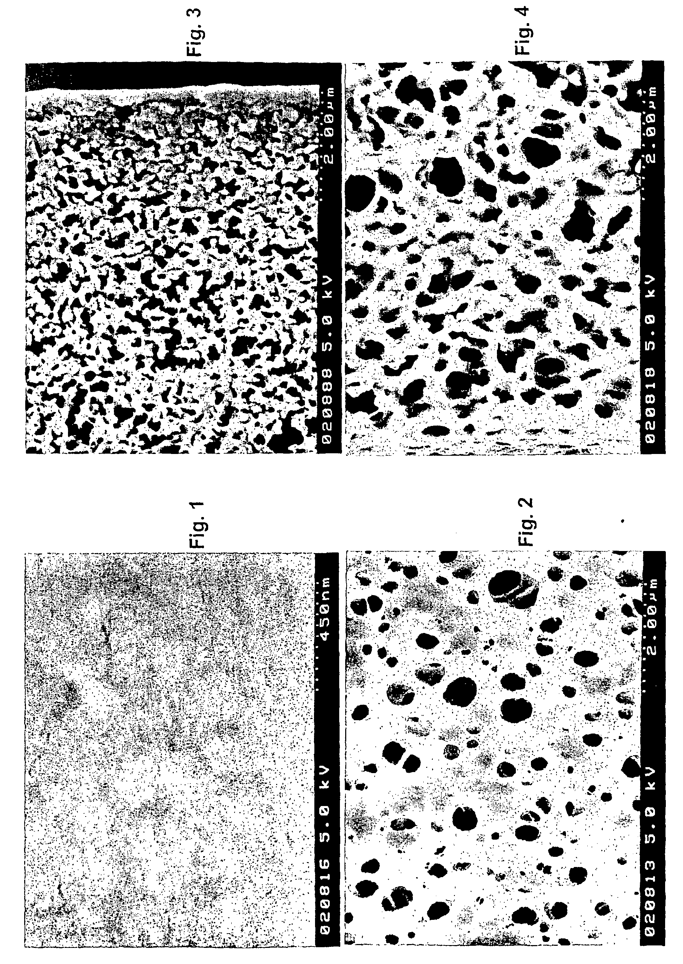

Es wurde eine Hohlfasermembran mit einem Außendurchmesser von ca. 415 $\mu$m, einer Wandstärke von ca. 90 $\mu$m sowie einer Porosität von 57 Vol.-% erhalten. Die Membran wies an ihrer Außenseite eine ca. 0,3 $\mu$m dicke Trennschicht auf, wobei entsprechend der REM-Untersuchung der äußeren Oberfläche bei einer Vergrößerung von 60 000 keine Poren feststellbar waren (Fig. 1 bis 4). Für die Membran gemäß diesem Beispiel wurde ein $CO_2$-Fluss von 4,65 ml/(cm$^2$*min*bar), ein $N_2$-Fluss von 0,54 ml/(cm$^2$*min*bar) und damit ein Gastrennfaktor $\alpha(CO_2/N_2)$ von ca. 8,6 ermittelt. Die Membran wies eine Plasmadurchbruchzeit von mehr als 72 Std. auf. Nach Erreichen dieser Zeit wurde die Messung abgebrochen.

Beispiel 2:

Es wurde wie in Beispiel 1 vorgegangen, wobei als Lösemittel Dibenzylether eingesetzt wurde.

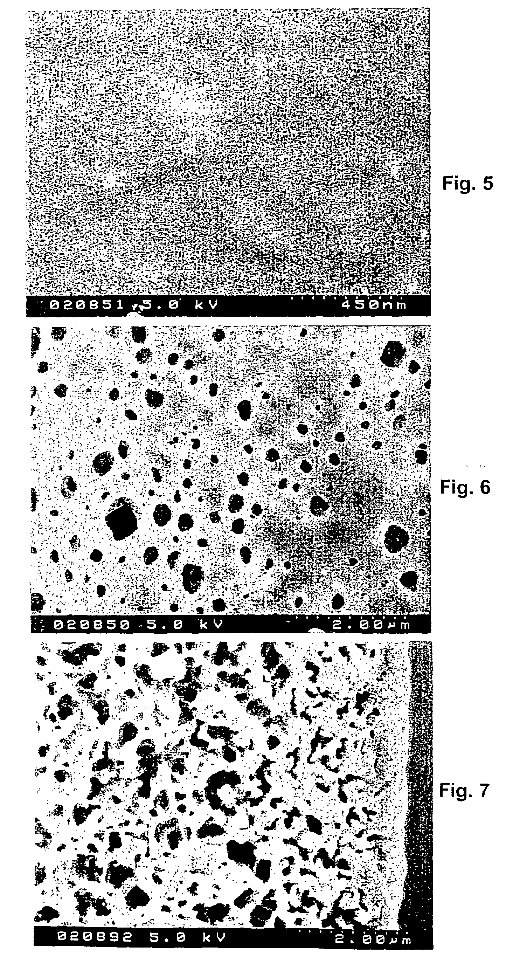

Die so erhaltene Hohlfasermembran hatte einen Außendurchmesser von ca. 400 $\mu$m, eine Wandstärke von ca. 95 $\mu$m sowie eine Porosität von ca. 56 Vol.-%. Die Membran wies ebenfalls eine schwammartige mikroporöse Stützstruktur und an ihrer Außenseite eine 0,1 bis 0,3 $\mu$m dicke Trennschicht auf, wobei entsprechend der REM-Untersuchung der äußeren Oberfläche bei einer Vergrößerung von 60 000 keine Poren feststellbar waren (Fig. 5 bis 7). Für die Membran gemäß diesem Beispiel wurden im Mittel ein $CO_2$-Fluss von 2,58 ml/(cm$^2$*min*bar), ein $N_2$-Fluss von 0,83 ml/(cm$^2$*min*bar) sowie ein Gastrennfaktor $\alpha(CO_2/N_2)$ von 3,1 ermittelt. Für die Membran wurde eine Plasmadurchbruchzeit von mehr als 72 Std. ermittelt.

Beispiel 3:

Es wurde wie in Beispiel 1 vorgegangen, wobei als Lösemittel Kokosöl verwendet wurde. Die Mischertemperatur betrug 285°C.

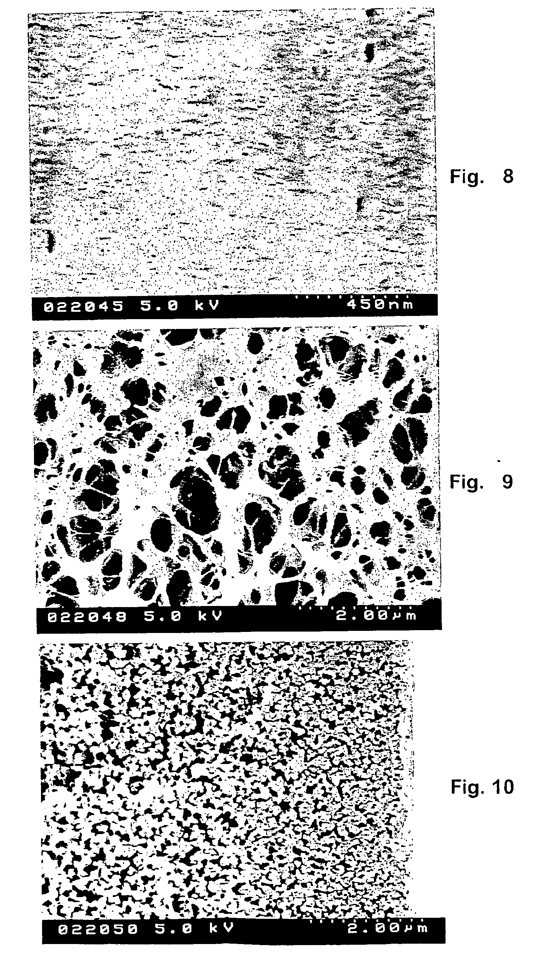

Die resultierende Hohlfasermembran hatte ähnliche Dimensionen wie diejenige des Beispiels 2. Sie wies an ihrer Außenseite eine dünne Trennschicht mit einzelnen Poren einer Größe bis ca. 100 nm auf (Fig. 8 bis 10). $CO_2$-Flus

und $N_2$-Fluss der Membran gemäß diesem Beispiel lagen in gleicher Größenordnung im Bereich zwischen 64 und 76 ml/(cm$^2$*min*bar).

Beispiel 4:

Die Membranherstellung erfolgte analog zu der in Beispiel 1 beschriebenen. Als Lösemittel wurde jedoch Palmkernöl eingesetzt. Zur Abkühlung wurde als Kühlmedium eine Glycerin/Wasser-Mischung im Verhältnis 65:35 eingesetzt. Die Mischertemperatur war auf 265°C eingestellt.

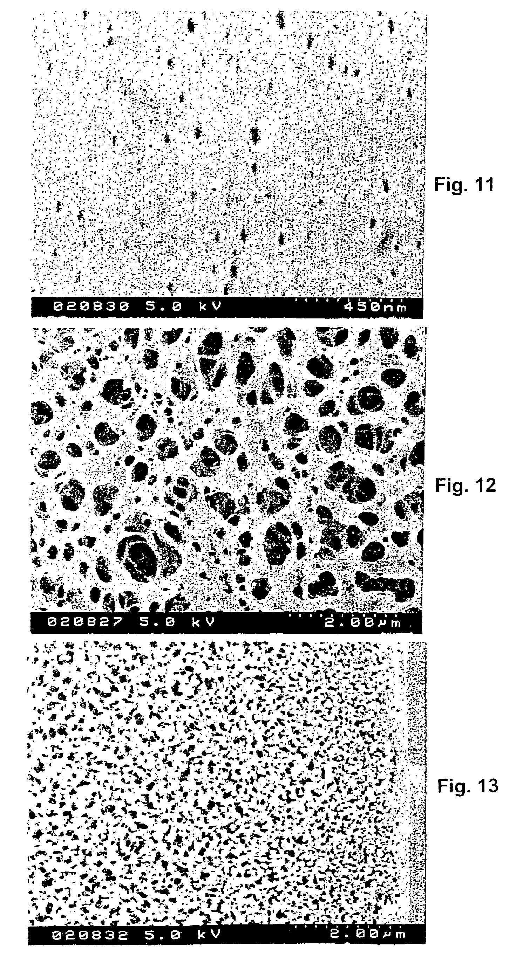

Die so hergestellte Hohlfasermembran hatte einen Außendurchmesser von 406 $\mu$m und eine Wandstärke von 96 $\mu$m. Ihre Porosität lag oberhalb von 55 Vol.-%. Die Membran wies eine schwammartige mikroporöse Stützstruktur und an ihrer Außenseite eine Trennschicht mit einer Dicke von ca. 0,2 $\mu$m auf. Bei der REM-Untersuchung waren in der äußeren Oberfläche der Membran, d.h. in der Trennschicht, zahlreiche Poren einer Größe bis ca. 80 nm erkennbar (Fig. 11 bis 13). $CO_2$-Fluss und $N_2$-Fluss lagen bei 179 bzw. 202 ml/(cm$^2$*min*bar), so dass sich ein Gastrennfaktor $\alpha$ ($CO_2/N_2$) von 0,89 ergab.

Vergleichsbeispiel 1:

Es wurde wie in Beispiel 1 vorgegangen. Als Lösemittel wurde Dioctyladipat eingesetzt. Für Dioctyladipat liegt die Entmischungstemperatur einer Lösung von 25 Gew.-% des als Polymerkomponente eingesetzten Poly-(4-methyl-1-penten) nur um ca. 5°C über der Erstarrungstemperatur und damit unterhalb des erfindungsgemäß geforderten Minimalwerts von 10°C. Als Abkühlmedium wurde Glycerintriacetat eingesetzt, welches auf Raumtemperatur gehalten wurde.

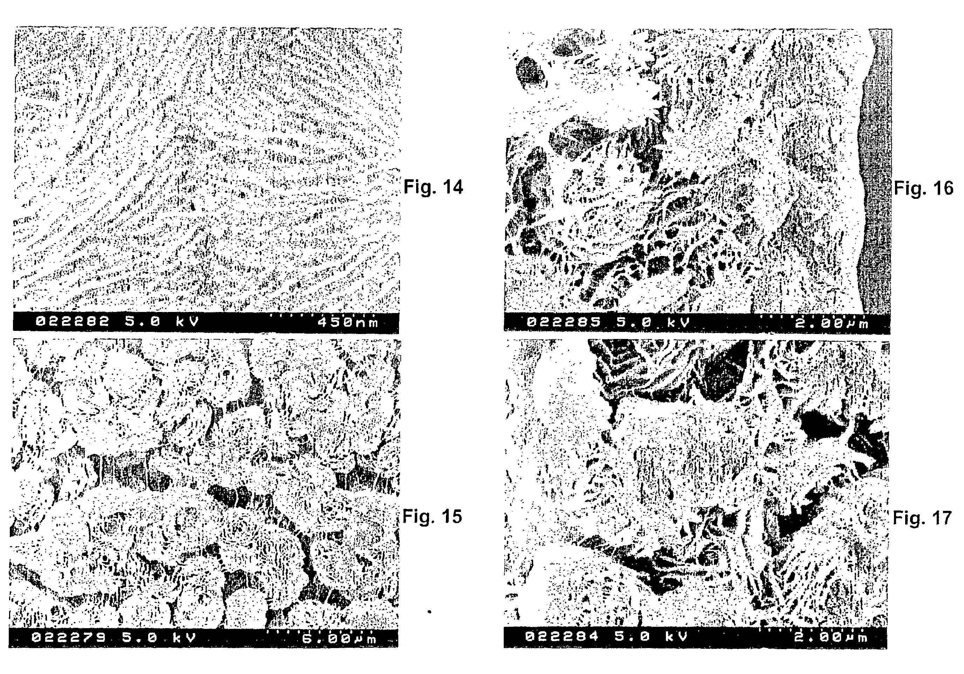

Die so hergestellten Membranen hatten eine integral asymmetrische Struktur mit einer dichten Trennschicht, wobei die Trennschicht allerdings relativ dick war und eine Stärke von etwa 3 $\mu$m aufwies. Die an diese Trennschicht angrenzende Stützstruktur hatte anstelle eines schwammartigen Aufbaus einen Aufbau aus partikelförmigen Strukturelementen, wobei die Strukturelemente über lamellenartige oder fibrilläre Stege miteinander verbunden waren (Fig. 14 bis 17). Diese nicht erfindungsgemäßen Membranen besaßen darüber hinaus nur eine geringe mechanische Stabilität.

Vergleichsbeispiel 2:

Das Verfahren zur Membranherstellung wurde wie in Vergleichsbeispiel 1 durchgeführt. Als Lösemittel wurde anstelle von Dioctyladipat jedoch Isopropylmyristat eingesetzt. Auch für Isopropylmyristat liegt die Entmischungstemperatur einer Lösung von 25 Gew.-% des als Polymerkomponente eingesetzten Poly-(4-methyl-1-penten) um ca. 5°C über der Erstarrungstemperatur und damit unterhalb des erfindungsgemäß geforderten Minimalwerts von 10°C.

Die so hergestellten Membranen ähnelten denjenigen gemäß Vergleichsbeispiel 1 und hatten eine integral asymmetrische Struktur mit einer kompakten, ca. 2 $\mu$m dikken Trennschicht. Die an diese Trennschicht angrenzende Stützstruktur hatte ebenfalls einen Aufbau aus partikelförmigen, über lamellenartige oder fibrilläre Stege miteinander verbunden Strukturelementen. Diese Membranen gemäß den Vergleichbeispielen besaßen darüber hinaus nur eine geringe mechanische Stabilität.

**Patentansprüche**

1. Verfahren zur Herstellung einer integral asymmetrischen hydrophoben Membran mit einer schwammartigen, offenporigen mikroporösen Stützstruktur und einer Trennschicht mit gegenüber der Stützstruktur dichterer Struktur, wobei das Verfahren mindestens die Schritte umfasst:

a) Herstellung einer homogenen Lösung aus einem System von 20-90 Gew.-% einer Polymerkomponente aus mindestens einem Polyolefin und 80-10 Gew.-% eines Lösemittels für die Polymerkomponente, wobei das System bei erhöhten Temperaturen einen Bereich aufweist, in dem es als homogene Lösung vorliegt, und bei Abkühlung eine kritische Entmischungstemperatur, unterhalb der kritischen Entmischungstemperatur im flüssigen Aggregatzustand eine Mischungslücke und eine Erstarrungstemperatur,

b) Ausformen der Lösung zu einem Formkörper mit einer ersten Oberfläche und einer zweiten Oberfläche in einem Formwerkzeug, welches eine Werkzeugtemperatur oberhalb der kritischen Entmischungstemperatur aufweist,

c) Abkühlung des Formkörpers mittels eines Abkühlmediums, welches auf eine Abkühltemperatur unterhalb der Erstarrungstemperatur temperiert ist, mit einer solchen Geschwindigkeit, dass eine thermodynamische Nichtgleichgewichts-flüssig-flüssig-Phasentrennung in eine polymerreiche und eine polymerarme Phase und anschließend bei Unterschreiten der Erstarrungstemperatur Erstarrung der polymerreichen Phase erfolgt, wobei ein flüssiges Abkühlmedium verwendet wird, welches die Polymerkomponente bei Temperaturen bis zur Werkzeugtemperatur nicht löst und chemisch nicht mit ihr reagiert,

d) gegebenenfalls Entfernen der polymerarmen Phase aus dem Formkörper,

**dadurch gekennzeichnet, dass** als Lösemittel für die Polymerkomponente eine Verbindung oder eine Mischung von Verbindungen verwendet wird, wobei für jede Verbindung gilt, dass für eine Lösung von 25 Gew.-% der Polymerkomponente in dieser Verbindung bei Abkühlung mit einer Abkühlrate von 1°C/min die Entmischungstemperatur um 10 bis 70°C über der Erstarrungstemperatur liegt.

2. Verfahren nach Anspruch 1, **dadurch gekennzeichnet, dass** für jede Verbindung gilt, dass für eine Lösung von 25 Gew.-% der Polymerkomponente in dieser Verbindung bei Abkühlung mit einer Abkühlrate von 1°C/min die Entmischungstemperatur um 20 bis 50°C über der Erstarrungstemperatur liegt.

3. Verfahren nach Anspruch 2, **dadurch gekennzeichnet, dass** für jede Verbindung gilt, dass für eine Lösung von 25 Gew.-% der Polymerkomponente in dieser Verbindung bei Abkühlung mit einer Abkühlrate von 1°C/min die Entmischungstemperatur um 25 bis 45°C über der Erstarrungstemperatur liegt.

4. Verfahren nach einem oder mehreren der Ansprüche 1 bis 3, **dadurch gekennzeichnet, dass** die Polymerkomponente eine Dichte von $\leq$ 910 kg/m$^3$ aufweist.

5. Verfahren nach einem oder mehreren der Ansprüche 1 bis 4, **dadurch gekennzeichnet, dass** das Abkühlmedium ein Nichtlöser für die Polymerkomponente ist, welcher die Polymerkomponente beim Erwärmen bis höchstens zum Siedepunkt des Nichtlösers nicht zu einer homogenen Lösung löst.

6. Verfahren nach einem oder mehreren der Ansprüche 1 bis 5, **dadurch gekennzeichnet, dass** das Abkühlmedium eine Flüssigkeit ist, die ein starker Nichtlöser für die Polymerkomponente ist und die bei der Abkühltemperatur mit dem Lösemittel homogen mischbar ist.

7. Verfahren nach einem oder mehreren der Ansprüche 1 bis 6, **dadurch gekennzeichnet, dass** das Abkühlmedium eine Temperatur aufweist, die mindestens 100°C unterhalb der kritischen Entmischungstemperatur liegt.

8. Verfahren nach einem oder mehreren der Ansprüche 1 bis 7, **dadurch gekennzeichnet, dass** 30-60 Gew.-% der Polymerkomponente in 70-40 Gew.-% des Lösemittels gelöst werden.

9. Verfahren nach einem oder mehreren der Ansprüche 1 bis 8, **dadurch gekennzeichnet, dass** das in der Polymerkomponente enthaltene mindestens eine Polyolefin ausschließlich aus Kohlenstoff und Wasserstoff besteht.

10. Verfahren nach Anspruch 9, **dadurch gekennzeichnet, dass** das mindestens eine Polyolefin ein Poly-(4-methyl-1-penten) ist.

11. Verfahren nach Anspruch 9, **dadurch gekennzeichnet, dass** das mindestens eine Polyolefin ein Polypropylen ist.

12. Verfahren nach Anspruch 9, **dadurch gekennzeichnet, dass** das mindestens eine Polyolefin eine Mischung aus einem Poly-(4-methyl-1-penten) und einem Polypropylen ist.

13. Verfahren nach Anspruch 10, **dadurch gekennzeichnet, dass** als Lösemittel Palmkernöl, Dibutylphthalat, Dioctylphthalat, Dibenzylether, Kokosöl oder eine Mischung hieraus verwendet wird.

14. Verfahren nach Anspruch 11, **dadurch gekennzeichnet, dass** als Lösemittel N,N-Bis(2-hydroxyethyl)talgfettamin, Dioctylphthalat oder eine Mischung hieraus verwendet wird.

15. Verfahren nach einem oder mehreren der Ansprüche 1 bis 14 zur Herstellung einer Hohlfasermembran.

**Claims**

1. Process for producing an integrally asymmetrical hydrophobic membrane having a sponge-like, open-pored, microporous support structure and a separation layer with a denser structure compared to the support structure, the process comprising at least the steps of:

a) preparing a homogeneous solution from a system comprising 20-90% by weight of a polymer component consisting of at least one polyolefin and 80-10% by weight of a solvent for the polymer component, wherein the system at elevated temperatures has a range in which it is present as a homogeneous solution and on cooling a critical demixing temperature, below the critical demixing temperature in the liquid state of aggregation a miscibility gap, and a solidification temperature,

b) rendering the solution to form a shaped object, with first and second surfaces, in a die having a temperature above the critical demixing temperature,

c) cooling the shaped object using a cooling medium, conditioned to a cooling temperature below the solidification temperature, at such a rate that a thermodynamic non-equilibrium liquid-liquid phase separation into a high-polymer-content phase and a low-polymer-content phase takes place and solidification of the high-polymer-content phase subsequently occurs when the temperature falls below the solidification temperature, a liquid cooling medium being used that does not dissolve or react chemically with the polymer component at temperatures up to the die temperature,

d) possibly removing the low-polymer-content phase from the shaped object,

**characterized in that** a solvent for the polymer component is used that is a compound or a mixture of compounds, wherein for each compound, on cooling at a rate of 1°C/min, the demixing temperature of a solution of 25% by weight of the polymer component in this compound is 10 to 70°C above the solidification temperature.

2. Process according to Claim 1, **characterized in that** for each compound, on cooling at a rate of 1°C/min, the demixing temperature of a solution of 25% by weight of the polymer component in this compound is 20 to 50°C above the solidification temperature.

3. Process according to Claim 2, **characterized in that** for each compound, on cooling at a rate of 1°C/min, the demixing temperature of a solution of 25% by weight of the polymer component in this compound is 25 to 45°C above the solidification temperature.

4. Process according to one or more of Claims 1 to 3, **characterized in that** the polymer component has a density of $\leq 910$ kg/m$^3$.

5. Process according to one or more of Claims 1 to 4, **characterized in that** the cooling medium is a non-solvent for the polymer component that, on heating to at most the boiling point of the non-solvent, does not dissolve the polymer component to form a homogeneous solution.

6. Process according to one or more of Claims 1 to 5, **characterized in that** the cooling medium is a liquid that is a strong non-solvent for the polymer component and is homogeneously miscible with the solvent at the cooling temperature.

7. Process according to one or more of Claims 1 to 6, **characterized in that** the cooling medium has a temperature that is at least 100°C below the critical demixing temperature.

8. Process according to one or more of Claims 1 to 7, **characterized in that** 30-60% by weight of the polymer component is dissolved in 70-40% by weight of the solvent.

9. Process according to one or more of Claims 1 to 8, **characterized in that** the at least one polyolefin contained in the polymer component consists exclusively of carbon and hydrogen.

10. Process according to Claim 9, **characterized in that** the at least one polyolefin is a poly(4-methyl-1-pentene).

11. Process according to Claim 9, **characterized in that** the at least one polyolefin is a polypropylene.

12. Process according to Claim 9, **characterized in that** the at least one polyolefin is a mixture of a poly(4-methyl-1-pentene) and a polypropylene.

13. Process according to Claim 10, **characterized in that** palm nut oil, dibutyl phthalate, dioctyl phthalate, dibenzyl ether, coconut oil, or a mixture thereof is used as the solvent.

**14.** Process according to Claim 11, **characterized in that** N,N-bis(2-hydroxyethyl)tallow amine, dioctyl phthalate, or a mixture thereof is used as the solvent.

**15.** Process according to one or more of Claims 1 to 14 for producing a hollow-fiber membrane.

**Revendications**

**1.** Procédé de production d'une membrane hydrophobe intégralement asymétrique, comportant une structure support microporeuse à pores ouverts, spongieuse, et une couche de séparation, de structure plus compacte que la structure support, lequel procédé comprend au moins les étapes consistant à :

a) préparer une solution homogène à partir d'un système comprenant 20 à 90 % en poids d'un constituant polymère, formé d'au moins une polyoléfine, et 80 à 10 % en poids d'un solvant pour le constituant polymère, ce système présentant, à température élevée, un domaine dans lequel il se trouve sous forme de solution homogène, et au refroidissement, une température critique de démixtion, au-dessous de la température critique de démixtion et à l'état liquide, une lacune de miscibilité et une température de solidification,
b) mettre la solution sous la forme d'un corps moulé présentant une première surface et une deuxième surface, dans un outil de moulage dont la température de moule est supérieure à la température critique de démixtion,
c) refroidir le corps moulé au moyen d'un milieu de refroidissement qui est stabilisé à une température de refroidissement inférieure à la température de solidification, à une vitesse permettant de produire une séparation de phase liquide-liquide en non-équilibre thermodynamique donnant une phase riche en polymère et une phase pauvre en polymère, suivie d'une solidification de la phase riche en polymère au passage au-dessous de la température de solidification, en employant un milieu de refroidissement liquide qui ne dissout pas le constituant polymère et ne réagit pas chimiquement avec lui à des températures inférieures ou égales à la température de moule,
d) le cas échéant, éliminer du corps moulé la phase pauvre en polymère,

lequel procédé est **caractérisé en ce qu'**on utilise comme solvant pour le constituant polymère, un composé ou un mélange de composés, chaque composé satisfaisant à la condition que, pour une solution à 25 % en poids du constituant polymère dans ce composé et pour un refroidissement à une vitesse de 1°C/minute, la température de démixtion est supérieure de 10 à 70°C à la température de solidification.

**2.** Procédé selon la revendication 1, **caractérisé en ce que** chaque composé satisfait à la condition que, pour une solution à 25 % en poids du constituant polymère dans ce composé et pour un refroidissement à une vitesse de 1°C/minute, la température de démixtion est supérieure de 20 à 50°C à la température de solidification.

**3.** Procédé selon la revendication 2, **caractérisé en ce que** chaque composé satisfait à la condition que, pour une solution à 25 % en poids du constituant polymère dans ce composé et pour un refroidissement à une vitesse de 1°C/minute, la température de démixtion est supérieure de 25 à 45°C à la température de solidification.

**4.** Procédé selon une ou plusieurs des revendications 1 à 3, **caractérisé en ce que** le constituant polymère présente une masse volumique inférieure ou égale à 910 kg/m$^3$.

**5.** Procédé selon une ou plusieurs des revendications 1 à 4, **caractérisé en ce que** le milieu de refroidissement est un non-solvant pour le constituant polymère, qui ne dissout pas le constituant polymère pour donner une solution homogène par chauffage jusqu'à une température atteignant au plus la température d'ébullition du non-solvant.

**6.** Procédé selon une ou plusieurs des revendications 1 à 5, **caractérisé en ce que** le milieu de refroidissement est un liquide qui est un non-solvant fort pour le constituant polymère et qui, à la température de refroidissement, est miscible en mélange homogène avec le solvant.

**7.** Procédé selon une ou plusieurs des revendications 1 à 6, **caractérisé en ce que** le milieu de refroidissement présente une température qui est inférieure d'au moins 100°C à la température critique de démixtion.

**8.** Procédé selon une ou plusieurs des revendications 1 à 7, **caractérisé en ce qu'**on dissout 30 à 60 % en poids de constituant polymère dans 70 à 40 % en poids de solvant.

9. Procédé selon une ou plusieurs des revendications 1 à 8, **caractérisé en ce que** la polyoléfine, au nombre d'au moins une, qui se trouve dans le constituant polymère, est constituée exclusivement de carbone et d'hydrogène.

10. Procédé selon la revendication 9, **caractérisé en ce que** la polyoléfine, au nombre d'au moins une, est un poly(4-méthyl-1-pentène).

11. Procédé selon la revendication 9, **caractérisé en ce que** la polyoléfine, au nombre d'au moins une, est un polypropylène.

12. Procédé selon la revendication 9, **caractérisé en ce que** la polyoléfine, au nombre d'au moins une, est un mélange d'un poly(4-méthyl-1-pentène) et d'un polypropylène.

13. Procédé selon la revendication 10, **caractérisé en ce qu'**on utilise comme solvant de l'huile de palmiste, du phtalate de dibutyle, du phtalate de dioctyle, de l'éther dibenzylique, de l'huile de coco ou un mélange de ces produits.

14. Procédé selon la revendication 11, **caractérisé en ce qu'**on utilise comme solvant une amine grasse de suif N,N-bis(2-hydroxyéthylique), du phtalate de dioctyle ou un mélange de ces produits.

15. Procédé selon une ou plusieurs des revendications 1 à 14, permettant de produire une membrane à fibres creuses.

Fig. 3

Fig. 4

Fig. 1

Fig. 2

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

EP 1 469 935 B1